# EUROPÄISCHE PATENTSCHRIFT

(11) **EP 1 444 108 B1**
(45) Veröffentlichungstag und Bekanntmachung des Hinweises auf die Patenterteilung: **29.12.2010**
(21) Anmeldenummer: 02785347.2
(22) Anmeldetag: 31.10.2002
(51) Int. Cl.: B60K 31/18

(54) **VORRICHTUNG MIT ZUSÄTZLICHER RÜCKSTELLKRAFT AM GASPEDAL IN ABHÄNGIGKEIT VON DER SOLLWERT - ABWEICHUNG EINES FAHRZEUGPARAMETERS**
DEVICE WITH ADDITIONAL RESTORING FORCE ON THE GAS PEDAL BASED ON THE DEVIATION OF A VEHICLE PARAMETER FROM THE SET VALUE
DISPOSITIF A FORCE DE RAPPEL SUPPLEMENTAIRE AU NIVEAU DE L'ACCELERATEUR EN FONCTION DE L'ECART PAR RAPPORT A UNE VALEUR THEORIQUE D'UN PARAMETRE DE VEHICULE

(30) Priorität: 05.11.2001 DE 10153837; 26.11.2001 DE 10157622; 13.02.2002 DE 10206102; 02.05.2002 DE 10219674; 30.10.2002 DE 10250456
(43) Veröffentlichungstag der Anmeldung: 11.08.2004
(60) Teilanmeldung: 10166107.2
(73) Patentinhaber: Continental Teves AG & Co. oHG, 60488 Frankfurt am Main (DE)
(72) Erfinder: RITTER, Wolfgang, 61440 Oberursel/Ts. (DE); VON HAYN, Holger, 61118 Bad Vilbel (DE); SCHONLAU, Jürgen, 65396 Walluf (DE); QUEISSER, Torsten, 60489 Frankfurt (DE); KLIMES, Milan, 55270 Zornheim (DE); RÜFFER, Manfred, 65843 Sulzbach (DE); HAVERKAMP, Martin, 60389 Frankfurt (DE); GÖRLACH, Johannes, 35428 Langgöns (DE); KROLL, Wolfgang, 65719 Hofheim (DE); SCHIEL, Lothar, 65719 Hofheim (DE)
(86) Internationale Anmeldenummer: PCT/EP2002/012202
(87) Internationale Veröffentlichungsnummer: WO 2003/039899

(56) Entgegenhaltungen:
- EP-A- 0 709 245
- DE-A- 2 555 429
- DE-A- 10 110 836
- DE-A- 19 620 929
- US-A- 2 822 881
- US-A- 4 367 805
- US-A- 5 568 797

## Beschreibung

Die Erfindung betrifft eine Vorrichtung nach dem Oberbegriff des Patentanspruchs 1.

Die Erfindung betrifft eine Vorrichtung zur Steuerung eines Parameters eines Kraftfahrzeuges (beispielsweise der Geschwindigkeit eines Fahrzeugs) welche ein als Pedal ausgestaltetes Steuerorgan aufweist. Über das Steuerorgan beispielsweise das Gas-Pedal (oder Bremspedal) wird in die Zufuhr von Treibstoff zu dem Motor und damit die Fahrgeschwindigkeit des Fahrzeugs gesteuert (oder über die Aktivierung des Bremssystems die Geschwindigkeit reduziert). Für eine sichere und vorschriftsmäßige Fahrweise eines Fahrzeugs ist die Einhaltung einer geeigneten und/oder vorgeschriebenen Geschwindigkeit sehr wichtig. Um die augenblickliche Geschwindigkeit eines Fahrzeugs zu erkennen, muß der Fahrer bei den bekannten Anzeigen diese an einem Tachometer ablesen. Während der Zeit, in der der Fahrer dieses Meßinstrument abliest und das Ergebnis bewertet ist es ihm nur bedingt möglich auf den Verkehr zu achten.

Bei der Gestaltung eines Anzeigesystems insbesondere der Fahrgeschwindigkeit eines Fahrzeugs ist somit darauf zu achten, dass die Ablesung einerseits und die Durchführung der eigentlichen Fahreraufgabe (Einhaltung des Kurses, der Geschwindigkeit und des Abstandes zu anderen Fahrzeugen) sich möglichst wenig gegenseitig behindern. Hierzu sollten Warnanzeigen beispielsweise hinsichtlich einer zu großen Geschwindigkeit, so auffällig und leicht interpretierbar sein wie möglich, so dass der Fahrer besonders schnell und fehlerfrei darauf reagieren kann. Die Reaktionszeit auf eine Anzeige ist um so kürzer, je kompatibler sie mit dem zugehörigen Bedienelement ist, das heißt je höher der erkennbare Zusammenhang zwischen der Anzeige und dem Bedienelement selber ist.

Hierzu wurde aus der DE-OS 255 429 der Vorschlag bekannt, dass in Abhängigkeit von der Abweichung eines Parameters des Fahrzeugs (beispielsweise Abstand von einem anderen Fahrzeug, Abweichung von einer Sollgeschwindigkeit) eine Kraft in das die Geschwindigkeit des Fahrzeugs steuernde Pedal eingekoppelt wird. Eine derartige Funktion wird nachfolgend als Force-Feedback-Funktion bezeichnet und vielfach als FF-Funktion angegeben. Ein mit einer derartigen Funktion beaufschlagtes Pedal wird weiter unten vielfach als Force-Feedback-Pedal bzw.FFP angegeben.

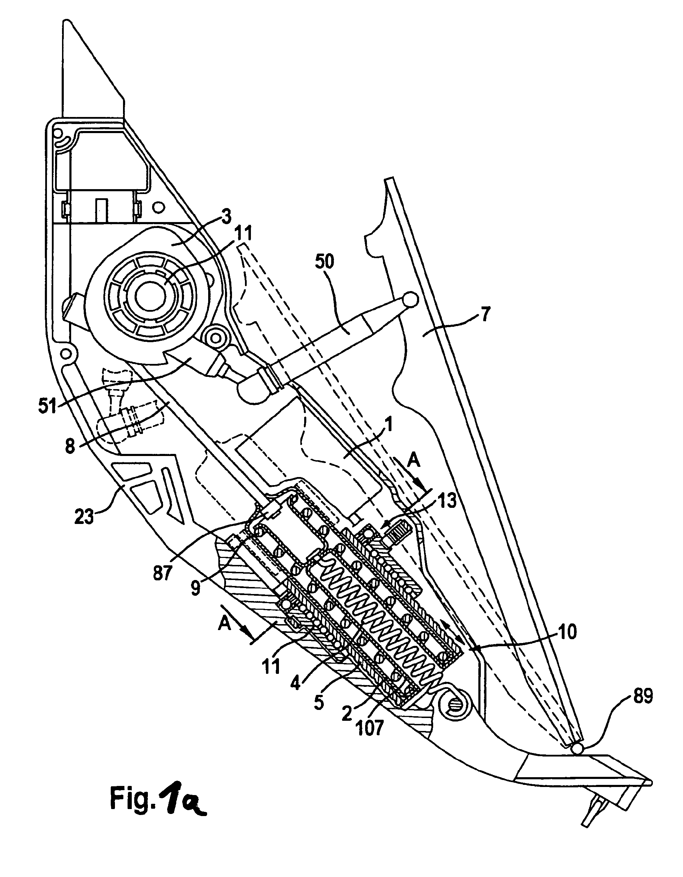

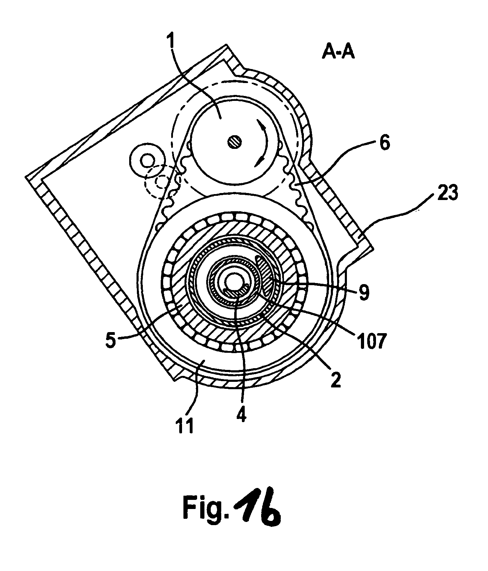

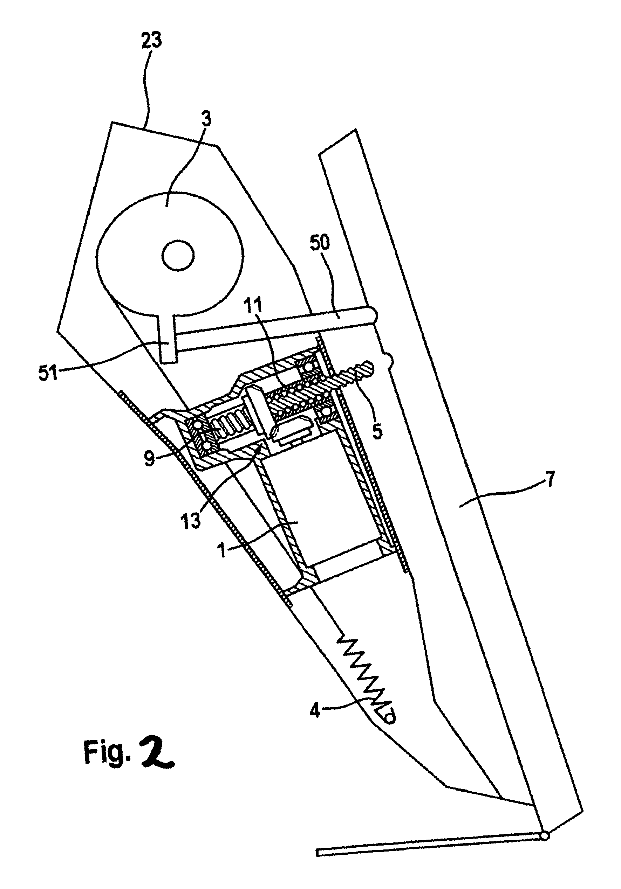

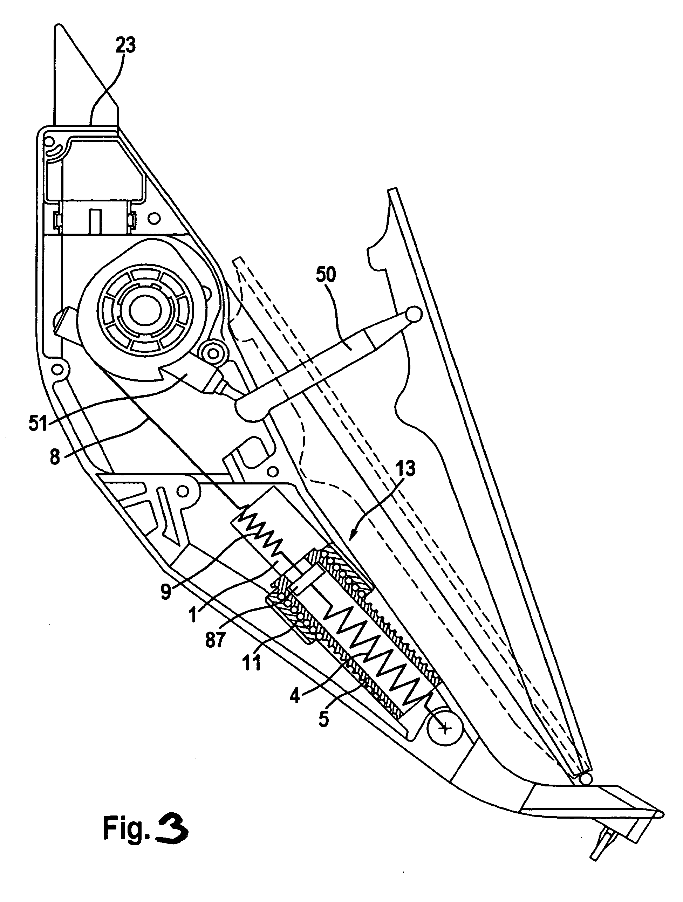

In der EP-PS 709245 wird hierzu beschrieben, wie bei einer Überschreitung der Sollgeschwindigkeit durch einen Rechner gesteuert eine Kraft auf das die Geschwindigkeit steuernde Pedal ausgeübt wird, die dem Druck des Fahrerfußes entgegenwirkt und so den Fahrer warnt. Da der Fahrer hierbei das Gefühl hat, die einer höheren Fahrgeschwindigkeit entsprechende Stellung des Gas-Pedals schon erreicht zu haben, weil ihm eine entsprechende Pedalkraft entgegenwirkt, wird der Fahrer hierdurch quasi diszipliniert und dazu geführt, die vorgeschriebene oder die für eine sichere Fahrt geeignete Geschwindigkeit einzuhalten. Dabei ist ein Drehhebel mit einem Gaszug gekoppelt. Liegt die ist-Geschwindigkeit unter der soll-Geschwindigkeit so nimmt ein Getriebe die Stellung wie dort in Fig. 1 gezeigt an und der Hebel ist frei beweglich. Bei Erreichen der soll-Geschwindigkeit wird die Lage von Fig. 2 eingenommen und ein Stellhebel schlägt an den Steuerhebel an. Bei einer weiteren Abweichung der ist-Geschwindigkeit von der sollGeschwindigkeit wird ein Zustand wie dort in Fig. 3 gezeigt eingenommen, bei der der Stellhebel durch den Steuerhebel entgegen dem Uhrzeigersinn zurückgeholt wird , wodurch das Gas zurückgenommen wird und die vom Fahrer ausgeübte Kraft wirkungslos wird. Dem Fahrer ist es nicht möglich im Bedarfsfall die Geschwindigkeit über den eingestellten Wert der Geschwindigkeit zu erhöhen.

Vorrichtungen gemäß dem Oberbegriff des Anspruchs 1 sind zum Beispiel aus der US-A-2 822 881 und US-A-4 367 805 bekannt.

Aus der US-PS 4367805 ist es bekannt die zur Dosierung des Gases dienende Leitung mit einem Hebel zu koppeln, der mit einem durch einen Motor angetriebenen Stellhebel zusammenwirkt. Beim Niederdrücken des Pedals wird der Hebel rechts herum gedreht. Wird der Tempomat eingeschaltet wird der Stellhebel in die Stellung gebracht, die der eingestellten Geschwindigkeit entspricht. Der Drehwinkel des Stellhebels hängt ab von der Differenz aus der ist-Geschwindigkeit und der soll-Geschwindigkeit. Solange die ist-Geschwindigkeit kleiner als die soll-Geschwindigkeit ist, ist die Lage der beiden Hebel frei veränderbar. Beim Überschreiten der soll-Geschwindigkeit muß bei der Bestätigung des Pedals gegen eine Feder gearbeitet werden. Im Ergebnis wächst die Gegenkraft in Abhängigkeit von der Differenz zwischen ist- und soll-Geschwindigkeit, eine schlagartige Erhöhung der Rückstellkraft ist nicht vorgesehen.

In der US-PS 5568797 wird über ein Pedal zusammen mit einer Drossel ein Hebel verstellt. Ein Verdrehen des Hebels nach rechts bedeutet eine Erhöhung der Geschwindigkeit. Die soll-Geschwindigkeit wird über eine Motorwelle mit dem daran befestigten Zeiger eingestellt, wobei ein Verdrehen nach rechts eine höhere soll-Geschwindigkeit bedeutet. Diese bekannte Einrichtung besitzt folgenden Nachteil: die Kraft der Feder wirkt anfangs der Rückstellkraft der Feder entgegen, wird dann zu Null und wirkt anschließend in Abhängigkeit von der Differenz der Geschwindigkeiten wachsend in Richtung der Rückstellkraft.

Bei der US-PS 2822881 geschieht die Voreinstellung mittels einer verdrehbaren Platte. Die ist-Geschwindigkeit wird durch einen Zeiger abgebildet. Überschreitet die ist- Geschwindigkeit die soll-Geschwindigkeit so wird ein Kontakt durch den Zeiger geschaltet und ein Relais schaltet einen Motor ein, welcher mittels einer Stange einen Schieber gegen einen Anschlag solange zurückfährt, bis die ist-Geschwindigkeit hinreichend unter der soll-Geschwindigkeit liegt und damit der Motor abgeschaltet wird. Aus der vorbekannten Steuerung ist außerdem bekannt, daß die Stellkraft durch einen elektromechanischen Aktuator erzeugt wird.

Es hat sich gezeigt, dass die bekannt gewordenen Konstruktionen recht aufwendig sind und eine Reihe von der Praxis gestellten Forderungen nicht erfüllen. So muß unter anderem auch darauf geachtet werden, dass bei der Verwendung eines Elektromotors zum Aufbringen der FF-Funktion dieser nicht überlastet wird. Weiterhin muß Vorsorge dafür getroffen werden, dass unter keinen Umständen der Aktuator für die FF-Funktion bzw. die Vorrichtung selbsttätig die Geschwindigkeit des Fahrzeugs erhöhen kann und damit Gefahren verstärkt, die durch die Einrichtung gerade vermieden werden sollen. Weiterhin soll der Fahrer die volle Kontrolle über das Fahrzeug behalten. Das heißt, dem Fahrer muß es möglich sein das Gaspedal (bzw. Bremspedal) im Sinne einer höheren Geschwindigkeit oder eines stärkeren Bremsvorganges auch dann betätigen zu können wenn die FF-Funktion schon eingesetzt hat. Dieser Vorgang wird als "Übertreten" bezeichnet. Weiterhin muß sichergestellt sein, dass der Fahrer bemerkt, dass von seinem Fahrzeug die soll-Geschwindigkeit überschritten wurde. Dabei ist zu beachten, dass die auf das Pedal bei einer bestimmten Geschwindigkeit aufgebrachte Kraft sehr unterschiedlich sein kann, je nachdem wie stark das Fahrzeug beladen ist oder ob es bergauf oder bergab fährt. In der eben genannten US-PS 2822881 sind Übertretmittel offenbart, über welche die Stellkraft durch eine hinreichend große Betätigungskraft übertretbar ist.

Die Erfindung geht daher aus von einer Vorrichtung, wie sie sich aus dem Oberbegriff des Hauptanspruches ergibt.

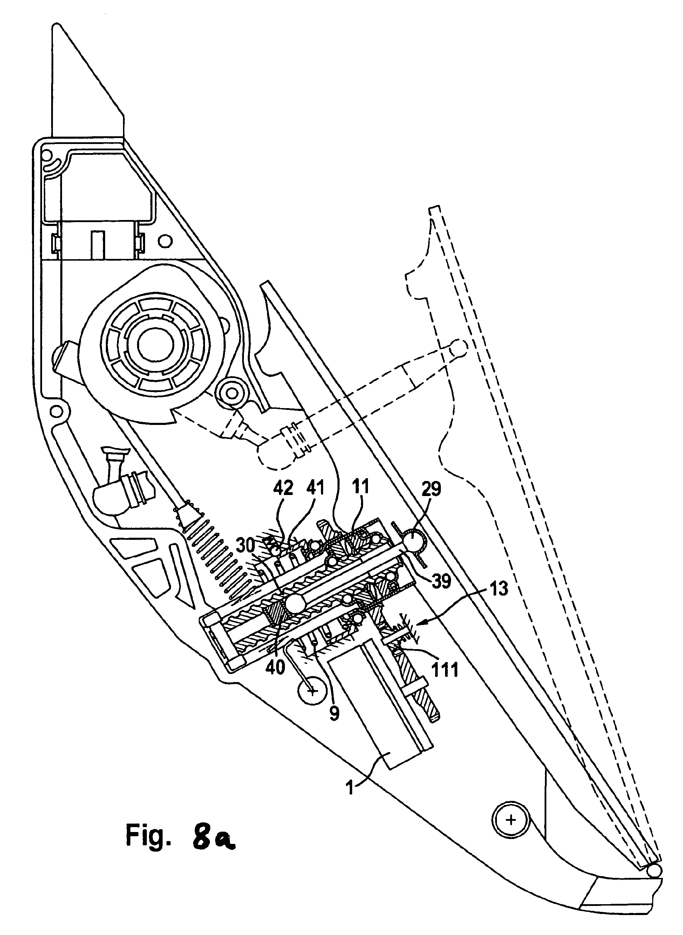

Aufgabe der Erfindung ist es Verbesserungen der bekannten Konstruktionen zu beschreiben, durch welche die Herstellungskosten für die Vorrichtung reduziert werden, die Zuverlässigkeit der Arbeitsweise der Vorrichtung verbessert wird und zusätzlich vorteilhafte Merkmale eingeführt werden, welche die Handhabung der Vorrichtung in der Praxis vereinfachen. Einzelheiten zu der Problematik der bekannten Vorrichtungen lassen sich auch aus den Figuren 8a und 8c im Zusammenhang mit in der zugehörigen Beschreibung entnehmen.

Aufgabe der Erfindung ist es weiterhin die Möglichkeit sicherzustellen dass die gattungsgemäße Vorrichtung auch dann Übertreten werden kann, wenn die vorbekannten Übertretungsmittel blockiert sind. Damit ist gemeint, dass das Bremspedal entgegen der Wirkung der Rückstellkraft (FFP-Funktion) nieder getreten werden kann. Das ist beispielsweise dann wichtig, wenn eine Gefahrensituation am besten durch Beschleunigen des Fahrzeugs - beispielsweise zum Überholen - beseitigt werden kann. Dabei hat sich herausgestellt, dass diese Übertretungsmittel blockiert sein können, sodass ein Übertreten nicht mehr möglich ist. Dieser Zustand ist als nachteilig zu betrachten. Es soll also unter allen Umständen vermieden werden, dass durch eine in Richtung der Rückbewegung des Pedals auftretende Kraft zur Erhöhung einer Gefahrensituation führen kann anstatt diese zu beseitigen - auch für den Fall einer Blockade der Übertretungsmittel.

Die Aufgabe wird durch die sich aus dem kennzeichnenden Teil des Hauptanspruches ergebende Merkmalskombination gelöst. Dabei ist vorgesehen, dass der Aktuator durch ein Stellsignal angesteuert wird, welches von der Abweichung einer Messgröße des Fahrzeugs von einem Sollwert, insbesondere der Fahrgeschwindigkeit von einer vorgegebenen Sollgeschwindigkeit oder Bremskraft von einer zulässigen Bremskraft, ausgelöst wird oder zumindest abhängig ist und dass die zusätzliche Rücks tellkraft in Abhängigkeit von der Abweichung des Sollwertes insbesondere der ist-Geschwindigkeit von der soll-Geschwindigkeit auf das Pedal einwirkt und dass Notfallmittel vorgesehen sind, die ein Übertreten des Pedals entgegen der zusätzlichen Rückstellkraft auch dann gestatten, wenn die Übertretmittel eine Blockade aufweisen. Als Notfallmittel ist dabei eine Sicherheits-Feder in den Kraftfluss zwischen Aktuator und Pedal geschaltet ist und dass die Federkonstante dieser Sicherheits-Feder derart ausgewählt ist, dass sie erst dann elastisch nachgibt wenn die auf das Pedal ausgeübte Betätigungskraft eine bestimmte Schwelle überschreitet. Der Aktuator ist mit einem Getriebe versehen, über welches er die zusätzliche Rücks tellkraft an das Pedal abgibt, wobei das Getriebe ein Kugel-Gewinde-Trieb ist, der durch eine Gewinde-Spindel und eine Gewinde-Mutter gebildet ist. Die Gewinde-Spindel wirkt unmittelbar auf das Pedal ein und die Gewinde-Spindel oder die Gewinde-Mutter ist in axialer Richtung durch die Sicherheits-Feder elastisch gelagert.

Zum einen wird die zusätzliche Stellkraft (also die FF-Funktion) durch einen elektromechanischen Aktuator bereitgestellt. Dieser Aktuator ist vorteilhaft in Abhängigkeit von einer ganzen Reihe von Parametern steuerbar. Dies kann beispielsweise durch eine geeignete elektronische Schaltung wie durch einen Prozessor geschehen. Auf diese Weise ist es möglich die Stellkraft nicht nur von der Größe der Abweichung der ist-Geschwindigkeit von der soll-Geschwindigkeit abhängig zu machen. Vielmehr kann auch berücksichtigt werden mit welcher Kraft der Fahrer gerade das Gaspedal bedient, so dass sich die Stellkraft hiervon abhängig einstellen läßt. Auf diese Weise läßt sich vermeiden, dass der Fahrer beispielsweise bei einer Bergfahrt, bei der das Pedal mit größerer Kraft bedient werden muß, bei nur geringer Geschwindigkeitsüberschreitung die einsetzende relativ kleine Stellkraft nicht spürt. Die Stellkraft soll also zwar qualitativ von der Differenz der Geschwindigkeiten aber nicht quantitativ von dieser Differenz abhängig sein. Anders ausgedrückt, auch bei einer kleinen Abweichung der ist-Geschwindigkeit von der sollGeschwindigkeit soll die Stellkraft mit hinreichender Größe einsetzen, damit der Fahrer spürt, dass nunmehr die sollGeschwindigkeit überschritten wurde und das Pedal von dem Aktuator zurückgestellt wird.

Schließlich soll es für den Fahrer möglich sein in Sonderfällen die Stellkraft überwinden zu können. Hierbei ist an Gefahrensituationen gedacht, bei denen eine Reduzierung der Geschwindigkeit mit einer erhöhten Gefahr verbunden sein kann, etwa bei einem Überholvorgang vor einer Bergkuppe. Dieser Vorgang wird vielfach als Übertreten bezeichnet.

Es sollen unter anderen Mittel vorgesehen sein, durch welche die zusätzliche Stellkraft einschließlich der ohne dies vorgegebenen Rückstellkraft durch den Fahrer übertreten werden kann. Damit ist gemeint, dass der Fahrer nicht der von dem Aktuator insbesondere Elektro-Motor ausgeübten, das Pedal zurück stellenden Stellkraft nachgibt sondern dieser Kraft standhält und somit das Pedal in seiner Lage verharrt oder sogar dass der Fahrer eine größere Kraft ausübt, durch welche das Pedal entgegen der Stellkraft im Sinne einer höheren Geschwindigkeit tiefer nieder getreten wird. Um das zu ermöglichen sind zwei Ausgestaltungen der erfindungsgemäßen Vorrichtung möglich. Wenn die Kraftquelle beispielsweise der Elektro-Motor reversiert werden kann, also entgegen seiner Antriebsrichtung bewegt werden kann, so läßt sich das "Übertreten" in einfacher Weise dadurch ermöglichen, dass der Antrieb durch eine entsprechende hohe Pedalkraft überwunden wird und der Motor auf diese Weise praktisch gezwungen wird, sich ein Stück rückwärts zu drehen.

Läßt sich die Kraftquelle aber nicht reversieren, so muß, um das Übertreten zu ermöglichen in den Kraftweg ein elastisches Glied eingefügt werden, welches bei hinreichend großer auf das Pedal ausgeübter Kraft nachgibt und so ein Niedertreten des Pedals entgegen der Stellkraft gestattet. Das elastische Glied beispielsweise Stahlfeder muß eine hinreichend große Vorspannung besitzen da andernfalls die Feder nachgibt ohne eine größere Kraft auf das Pedal auszuüben und so der Fahrer durch das Ansprechen der Force-Feedback-Pedal-Einrichtung (FFP-Einrichtung) nicht gewarnt wird. Anderseits wird angestrebt, dass die Federkonstante der Feder klein ist, damit sich die Stellkraft nicht zu stark mit der Stellung des Pedals ändert.

Selbst wenn aber die Kraftquelle reversiert werden kann, so ist es dennoch sehr zweckmäßig das beschriebene elastische Glied in den Kraftweg einzufügen. In Notsituationen kann es nämlich notwendig sein, dass das Pedal derart schnell nieder gedrückt werden muß, so dass die reversierende Kraftquelle und/oder ein dazwischen geschaltetes Getriebe nicht zu folgen vermag und quasi blockiert oder auch tatsächlich blockiert ist. Für diese Fälle wird vorgeschlagen auch bei Anwendung einer reversierenden Kraftquelle das beschriebene elastische Glied in den Kraftweg einzufügen.

Es wird vorgeschlagen, dass die Stellkraft sprungartig einsetzt. Hiermit ist gemeint, dass die Stellkraft nicht schleichend auftreten soll, so dass der Fahrer kaum merkt, dass die zusätzliche Stellkraft (FFP-Kraft) eingesetzt hat und möglicherweise der Täuschung unterliegt, dass Pedal-Gefühl habe sich geändert. Vielmehr ist es erwünscht, dass die zusätzliche Stellkraft ruckartig einsetzt und den Fahrer nicht in Zweifel darüber läßt, dass die Regelung das Pedal entgegen der Betätigungskraft des Fahrers zurück stellen will. Hierdurch läßt sich die notwendige Alarm-Wirkung erzielen. Wächst dagegen z. B. die Stellkraft mit der Differenz zwischen ist-Geschwindigkeit und soll-Geschwindigkeit an, so wird das faktische Anwachsen der Rückstellkraft am Pedal möglicherweise nur als ein verändertes Pedalgefühl nicht aber als Warnung verstanden.

Da zur Steuerung von Fahrzeugen außer mechanischen auch hydraulische und pneumatische Kräfte angewendet werden besteht die Möglichkeit, den Aktuator auf diese Weise mit Energie zu versorgen. Es kann stattdessen einen Elektromotor ein gesetzt werden. Durch die Verwendung eines Elektromotors als Kraftquelle läßt sich diese nicht nur sehr einfach mittels elektrischer Signale starten. Darüber hinaus kann diese Kraftquelle auch sehr leicht eingegebenen Steuersignalen folgen, so dass die Höhe der zusätzlichen Stellkraft sich während des FFP-Vorgangs leicht an zusätzliche Randbedingungen anpassen läßt. So kann beispielsweise die zusätzliche Stellkraft von der Höhe der gerade herrschenden normalen Rückstellungskraft und damit von der Pedalstellung abhängig gemacht werden. Hierdurch läßt sich sicherstellen, dass die zusätzliche Stellkraft immer in einem weitgehend gleichbleibenden Verhältnis zur beim Einsetzen der Stellkraft gerade aufgewendeten Rückstellkraft bleibt.

Es wird dafür Sorge getragen, dass nur eine in einer vorgegebenen Richtung wirkende Stellkraft wirksam werden kann, eine in Gegenrichtung wirkende Stellkraft aber sicher verhindert wird. Dies kann beispielsweise durch eine entsprechende Auswahl des Motortyps oder aber mechanisch durch geeignete Anschläge bewirkt werden. Diese Maßnahme ist insbesondere auch deshalb wichtig, weil ausgeschlossen werden muß, dass durch eine Fehlfunktion die Regelung das Fahrzeug beschleunigt anstatt dafür zu sorgen, dass das Gaspedal zurückgeschoben und damit die Geschwindigkeit abgesenkt wird. Weiter unten werden hierzu auch spezielle Bauelemente beschrieben, welche eine Kraft nur in einer einzigen Richtung übertragen können wie beispielsweise die Übertragung von Zugkräften durch Seile oder Bänder. Des weiteren müssen also Maßnahmen getroffen sein, um sicher zu verhindern, dass bei einer Fehlfunktion des Aktuators dieser nicht den Gashebel (bzw. Bremshebel) in die verkehrte Richtung fahren kann, also die Geschwindigkeit des Fahrzeugs erhöht statt sie abzusenken. Weiterhin soll die Stellkraft nur solange wirksam sein, wie die ist-Geschwindigkeit die soll-Geschwindigkeit überschreitet. Es ist also sicherzustellen, dass die Stellkraft sich bei Unterschreiten der sollGeschwindigkeit nicht umkehrt, etwa um den Fahrer zu zwingen sich an die eingestellte soll-Geschwindigkeit zu halten.

Wie weiter unten erläutert wird können in besonders einfacher Weise die Mittel zum Übertreten des Pedals entgegen der FFP-Kraft darin bestehen, dass die die zusätzliche Stellkraft zur Verfügung stellende Kraftquelle durch eine entsprechend hohe Betätigungskraft an der Pedale zu einer Bewegung entgegen ihrer Antriebsrichtung gezwungen werden kann. Besteht die Kraftquelle beispielsweise aus einem Elektromotor, so kann ein Übertreten darin bestehen; dass der eingeschaltete Motor durch die übertretende Kraft zu einer Bewegung entgegen seiner Antriebsrichtung gezwungen wird. Dabei muß aber sichergestellt werden, das ein Übertreten auch dann möglich ist, wenn der Motor und/oder das zwischen Motor und Pedal geschaltete Getriebe bei hohen Pedalkräften bzw. hohen Pedal -Betätigungsgeschwindigkeiten (z. B. schnelles Durchtreten des Gaspedals) blockieren. Dazu werden hierfür geeignete Maßnahmen vorgeschlagen, die nachfolgend vielfach als fail-safe-Einrichtungen bezeichnet werden. Eine zweckmäßige Lösung kann darin bestehen, in den Antriebweg der Kraftquelle eine steife Feder zu legen, die bei üblichen Übertret-Kräften wie ein unelastischer Gegenstand wirkt. Werden die Kräfte aber zu groß, was durch eine Blockade bedingt sein kann, so gibt die Feder nach und ermöglicht so eine Bewegung des Pedals entgegen der FFP-Kraft.

Um die das Pedal zurück drückende Kraft schlagartig zu erhöhen wird vorgeschlagen, anstatt der Kupplung einen unter Vorspannung stehenden Anschlag zu verwenden. Dabei kann der Anschlag ständig unter einer bestimmten Vorspannung stehen oder die Vorspannung wird erst dann aufgebaut, wenn die ist-Geschwindigkeit sich der soll-Geschwindigkeit nähert. Im Prinzip ist es nur notwendig, dass der Anschlag an der Stelle steht, die ein mit dem Pedal gekoppelter Gegenanschlag erreicht, wenn die soll-Geschwindigkeit überschritten wird. Ein Problem kann allerdings darin bestehen, dass die Lage des Pedals bei einer bestimmten Geschwindigkeit nicht eindeutig ist, da diese nicht nur von dem Zustand des Fahrzeugs (Belastung) sondern auch von dem Zustand der Fahrstrecke (Bergfahrt) abhängt. Bei der Vor-Einstellung der Lage des Anschlages ist somit darauf zu achten, dass die genannten Faktoren berücksichtigt werden. Die grundsätzliche Überlegung hierzu besteht darin, dass im Zeitpunkt der Einschaltung der FFP-Kraft diese zusätzliche Stellkraft auf das Pedal ausgeübt werden kann, ohne dass bekannt sein muß, wo das Pedal nun genau steht. Es ist also nur notwendig zu dem Zeitpunkt, bei dem die ist-Geschwindigkeit die soll-Geschwindigkeit erreicht, die zusätzliche Stellkraft an dem Pedal oder an dem zu dem Pedal führenden Kraftweg angreifen zulassen um die erwünschte Wirkung zu erzielen.

Der Elektromotor läuft also erst dann an, wenn die zusätzliche Stellkraft wirksam werden soll. Eine Voreinstellung eines Anschlages und die damit verbundenen, weiter oben geschilderten Probleme werden hierdurch einfach vermieden.

Um zu erreichen, dass die gewünschte Stellkraft sprungartig einsetzt wird vorgeschlagen, den Aktuator mit einer Kupplung zu versehen. Durch das Einschalten der Kupplung läßt sich die von dem Motor aufgebrachte Kraft schlagartig auf das Pedal übertragen. Nähere Ausführungen zu einem vorteilhaften Aufbau einer derartigen Kupplung werden weiter unten aufgeführt.

Die von dem Aktuator abgegebene Stellkraft wird durch ein Übertragungsglied eingespeist. Um nun sicherzustellen, dass in Sonderfällen der Fahrer die Stellkraft überwinden kann (übertreten) wird vorgeschlagen, das Stellglied selbst oder aber seine Lagerung elastisch auszubilden, so dass es ab einer bestimmten Betätigungskraft durch den Fahrer ausweichen kann und ein Verstellen der Pedale in Richtung höherer Geschwindigkeit erlaubt.

Eine besonders einfache Dimensionierung der Stellkraft läßt sich dadurch erreichen, dass die Stellkraft vollkommen getrennt von der Rückstellkraft in das Pedal eingekoppelt wird. Auf diese Weise kann der Aktuator unabhängig von der Rückstellkraft in Richtung Pedal-Modul wirksam werden. Es ist auf diese Weise auch leichter möglich den Aktuator in seiner Wirkung auf die Rückstellkraft abzustimmen.

Eine relativ einfache Konstruktion läßt sich dadurch erreichen, dass die Übertragungswege für die Stellkraft und die Rückstellkraft weitgehend gemeinsam genutzt werden. Dies kann beispielsweise dadurch geschehen, dass sowohl der Aktuator als auch die Quelle für die Rückstellkraft an der Umlenkrolle in dem Pedal-Modul angreifen. Das kann an einem gemeinsamen Angriffspunkt geschehen oder aber auch an unterschiedlichen Angriffspunkten.

Wählt man einen gemeinsamen Angriffspunkt, so kann auch das über die Umlenkrolle geführte Zugseil gemeinsam genutzt werden, so dass in Kraftrichtung vor der Umlenkrolle sowohl die Quelle für die Rückstellkraft als auch der Aktuator an den Zugseil angreifen. Dabei können die Rückstellkraft und die Stellkraft in Reihe geschaltet werden, die beiden Kräfte werden also hintereinander in das Zugseil oder seine Verlängerung eingekoppelt. Der Vorteil ist hier, dass das Übertragungsglied des Aktuators an der Rückstellfeder aufgehängt werden kann also hierdurch elastisch verankert ist. Durch das Übertragungsglied läßt sich durch Verkürzung des Seilzuges die Zugkraft der Rückstellfeder schlagartig vergrößern, so dass die Zugkraft um die Größe der Stellkraft vergrößert ist. Der Fahrer kann aber die Stellkraft übertreten solange die Rückstellfeder noch weiter ausgezogen werden kann.

Wie weiter oben schon erläutert wurde, kann eine Kupplung dazu verwendet werden, die Kraft des Aktuators schlagartig auf das Pedal einwirken zu lassen. Dabei kann die Kupplung die Stellkraft entweder unmittelbar auf das Pedal oder aber mittelbar, z. B. über das Zugseil und die Umlenkrolle übertragen. Es kann also die Kraft des Motors, der möglicherweise schon vor dem Überschreiten des soll-Wertes angelassen wird oder der ständig im Leerlauf mitläuft, durch die Kupplung schlagartig auf das Pedal gebracht werden, so dass die das Pedal zurück ziehende Kraft sprungartig anwächst. Für die Erzeugung der Vorspannung kann wahlweise eine Spiralfeder oder eine Schraubenfeder verwendet werden. Die Vorspannung wird bevorzugt durch einen Elektromotor aufgebaut, der anläuft, bevor der soll-Wert erreicht wird oder während der sollWert erreicht wird.

Ein bevorzugter Aufbau unter Verwendung eines Anschlages kann darin bestehen, dass ein Elektromotor über ein Seil mit einer die Stellkraft aufbauenden Feder verbunden ist. Zieht der Elektromotor die Feder in die Länge so ist ein an dem Seil befestigter Anschlag nur mit einer entsprechend größeren Kraft in seiner Lage zu verändern. Befestigt man nun an das Zugseil der Rückstellfeder einen Gegenanschlag, so kann über die Änderung der Lage des Anschlages durch den Elektromotor der Punkt festgelegt werden, bei dem die Stellkraft wirksam wird. Dieses Prinzip ist auch dann gut anwendbar, wenn zwei Rückstellfedern vorgesehen sind, wie dies in der Praxis üblich ist. Aus Gründen der Symmetrie empfiehlt es sich in diesem Fall für jede der beiden Rückstellfedern einen Gegenanschlag vorzusehen, die gegen den von dem Elektromotor eingestellten Anschlag laufen.

In der Regel ist es günstig, den Anschlag gegenüber dem Gehäuse des Pedalmoduls zu verstellen. Hierdurch wird der Abstand des Gegenanschlages gegenüber dem Pedalhebel verändert. Eine andere Möglichkeit besteht darin, den Anschlag gegenüber dem Gehäuse des Pedalmoduls ortsfest zu halten und dem Pedalhebel mit einem in seiner Lage änderbaren Gegenanschlag zu versehen. Die Verstellung kann dabei durch einen Elektromotor geschehen, welcher an dem Pedalhebel befestigt ist.

Wie weiter oben schon erläutert kann die Lage des Anschlages auf einer Kreisbahn verstellt werden. Das ist insbesondere dann vorteilhaft, wenn die Stellkraft durch eine mittels eines Elektromotors vorgespannte Spiralfeder aufgebracht wird. Bei der Verwendung einer Schraubenfeder ist es vorteilhaft, den Anschlag auf einer linearen Strecke zu verschieben. Diese Konstruktionen gehen davon aus, dass der Anschlag mechanisch fest arretiert wird. Es ist aber auch möglich, den Anschlag nur in einer Koordinatenrichtung zu arretieren. Hierzu kann beispielsweise ein Seil oder ein Band verwendet werden, an dessen Ende sich ein Anschlag befindet. In Abhängigkeit von dem gewünschten Lagepunkt des Anschlages wird dann das Seil oder Band entsprechend auf- oder abgewickelt. Das andere Ende des Bandes ist mit einer geeigneten Feder verbunden, die die gewünschte Stellkraft zur Verfügung stellt.

An sich ist es möglich, dass ein Linearmotor eine Stellkraft auf das Pedal direkt oder durch Umlenkung der Kraft indirekt ausübt. Eine derartige Maßnahme wird weiter unten als sehr einfache Lösung bei der Auswahl des Elektromotors vorgeschlagen. Dagegen kann eine preiswerte Lösung darin bestehen, einen üblichen Elektromotor mit drehendem Rotor vorzusehen und die Größe der auszuübenden Kraft so wie die vorzugsweise lineare Kraftrichtung mittels eines Getriebes herbeizuführen. Geeignete Ausgestaltungen hierfür werden weiter unten erläutert.

Weiter oben war schon erläutert worden, dass es sich empfehlen kann, in dem Aktuator ein Getriebe einzusetzen. Hierbei empfiehlt sich die Verwendung eines Kugel-Gewinde-Triebes, welches sehr leichtgängig ist. Ist das Getriebe blockiert, so muß man dafür sorgen, dass der Fahrer die Gewinde-Spindel übertreten kann. Das geschieht dadurch, dass man die Spindel oder die Mutter des Getriebes elastisch lagert bzw. mit einem elastischen Glied versieht. Eine andere Möglichkeit besteht darin, die Selbsthemmung des Getriebes derart abzustimmen, dass ab einer bestimmten Betätigungskraft das Gewinde nachgibt, so dass der Fahrer auch in diesem Fall das Pedal übertreten kann. Hierbei handelt es sich um die normale Übertretfunktion.

Die Spindel des Kugel-Gewinde-Triebes wirkt unmittelbar auf das als Pedal ausgestaltete Steuerorgan ein. Vorzugsweise greifen die Rückstellkraft und die Stellkraft an unterschiedlichen Punkten des Pedalhebels an.

Anstatt eines der Elemente des Getriebes elastisch zu lagern, damit der Fahrer das Pedal übertreten kann ist es auch möglich eine spezielle Feder vorzusehen, die in den Kraftweg der Stellkraft eingefügt wird. Weiter oben wurde schon erläutert, dass unter Umständen die für die Rückstellkraft sorgende Feder gleichzeitig auch die Aufgabe der Übertretfunktion übernehmen kann. Ist das nicht möglich, weil die Rückstellfeder nicht weiter ausgedehnt werden kann, so wird vorgeschlagen, eine spezielle Feder für die Übertretfunktion vorzusehen.

Weiterhin kann die Rückstellfeder zusätzlich auch noch für die Stellkraft sorgen, in dem sie durch den Aktuator so weit verlängert wird, dass die Rückstellkraft sich schlagartig erhöht. Damit kann diese Feder bei geeigneter Abstimmung alle drei Aufgaben übernehmen, nämlich die Rückstellkraft und die Stellkraft zur Verfügung stellen und auch die Übertretfunktion übernehmen. In vielen Fällen ist es aber ratsam zumindest eine zusätzliche Feder einzusetzen, da hierdurch unterschiedliche Federkonstanten eingesetzt werden können. Vielfach soll auch die Funktion der Rückstellfeder nicht verändert werden, etwa wenn der Aktuator wahlweise und zusätzlich zur Verfügung gestellt werden soll.

Verwendet man zwei oder mehr Federn, so kann es sich aus Gründen der Platzersparnis empfehlen, diese ineinander zu schachteln. Dies ist auch dann möglich, wenn die Federn in Reihe geschaltet werden also in ihrer Wirkung hintereinander liegen. Einige der nachfolgenden Ausführungsbeispiele zeigen hier Einzelheiten. Vorteilhaft dabei ist, dass die verschiedenen Federn eine unterschiedliche Federkonstante aufweisen können.

Die weiter oben erwähnten Kupplungen können derart aufgebaut sein, dass sie die Kraftverbindung zwischen Elektromotor und Pedalhebel durch Formschluß (beispielsweise durch Verzahnung) oder durch Reibschluß bewirken. Dabei können wieder die kuppelnden Elemente als Scheiben oder auch als Stangen ausgestaltet sein. Um die Elemente zum Einschalten der Kupplung zusammenzuführen können Elektromagnete verwendet werden. Es ist aber auch möglich die Trägheit der Elemente für den Schaltvorgang auszunutzen. Dies kann beispielsweise dadurch geschehen, dass eine Schaltwelle vorgesehen wird, welche mit einem Außengewinde versehen ist und leichtgängig in einer Gewinde-Hülse läuft, beispielsweise mittels eines Kugel-Gewindes. Beginnt nun ein Elektromotor die GewindeHülse zu drehen, so bleibt die Schaltwelle aufgrund ihrer Trägheit stehen und fährt aus der Hülse heraus, wodurch die kuppelnden Elemente gegeneinander gefahren werden.

Die Kupplung kann aber auch eine mit Zähnen oder einer Reibfläche versehene Stange besitzen, in die ein zugeordnetes zweites Kupplungselement durch einen Schaltmagneten oder eine Exzenter-Welle gekoppelt wird.

Weiter oben und wurde schon erläutert, dass es sich besonders empfehlen kann, in dem Aktuator einen Linearmotor einzusetzen. Der Vorteil hierbei besteht insbesondere darin, dass der Linearmotor weder ein Getriebe noch eine Kupplung benötigt und zusätzlich in Form einer linearen Bewegung an dem Pedalhebel direkt angreifen kann. Wird der Induktor nicht bestromt, so leistet er gegenüber dem Pedalhebel praktisch keinen Widerstand. Durch einen einfachen Schaltvorgang , durch welchen der Induktor bestromt wird, läßt sich dann vorteilhaft durch die Reaktionsschiene eine Kraft auf dem Pedalhebel ausüben, da man für das sich bewegende Übertragungsglied (Reaktionsschiene) keine Stromzuführung benötigt, wenn es mit Dauermagneten versehen ist oder aus einem magnetisierbaren Werkstoff besteht. Es ist aber auch möglich die Reaktionsschiene gekrümmt auszuführen und den Induktor mit einem Drehhebel zu verwenden, welcher an der Kurvenscheibe angreift. Dieser Drehhebel kann gleichzeitig ein Teil des Koppelhebels sein, welcher in an sich bekannter Weise die Rückstellkraft zu dem Pedalhebel überträgt, welche von der Rückstellfeder in die Kurvenscheibe eingeleitet wird.

Verwendet man wie beschrieben, die Reaktionsschiene als Übertragungsglied, so kann diese auch innerhalb des Pedalmoduls in den Kraftweg der Rückstellfeder eingeschaltet werden. Dies geschieht am besten auf der Strecke zwischen der Rückstellfeder und der Kurvenscheibe.

Es wird angestrebt, die mechanisch und/oder elektrisch empfindlichen Teile vor möglicher Verschmutzung durch die umgebende Luft zu schützen. Hierzu wird vorgeschlagen die aus dem Gehäuse des Pedalmoduls herausragenden und mit dem Pedalhebel verbundenen beweglichen Teile mit Hilfe einer diese Teile umgebenden Manschette zu schützen. Andererseits ist dabei aber zu beachten, dass es möglich sein muß, den Pedalhebel gegenüber dem Gehäuse des Pedalmoduls sehr schnell bewegen zu können, beispielsweise bei einer Panik-Bremsung. Hierdurch wird aber der von der Umgebung abgedichtete Raum sehr schnell verengt, wodurch ein erheblicher Druck aufgebaut wird, welcher die Manschette gefährden kann. Daher wird vorgeschlagen, in dem Gehäuse ein Ventil vorzusehen, durch welches der Überdruck entweichen kann.

Es wurde weiterhin erläutert, einen Anschlag und/oder Gegenanschlag vorzusehen von dem die Stellkraft der Kraftquelle abgegeben beziehungsweise aufgenommen wird, sobald die ist-Geschwindigkeit in den Bereich der soll-Geschwindigkeit kommt. Eine theoretische Möglichkeit besteht darin, einen der beiden Anschläge in eine Position schon beim Einschalten der FFP-Einrichtung zu fahren, die der Gegenanschlag voraussichtlich beim Erreichen der soll-Geschwindigkeit einnehmen wird. Die Lage des Anschlages muß dann ständig nachgeregelt werden, je mehr sich die ist-Geschwindigkeit der soll-Geschwindigkeit nähert. Sehr viel einfacher aber ist es durch eine vorzugsweise elektrische oder elektronische Überwachung oder Steuerung in dem Moment die beiden Anschläge gegeneinander zubringen, in dem die sollGeschwindigkeit von der ist-Geschwindigkeit erreicht wird. Der Vorteil besteht insbesondere darin, dass zu diesem Zeitpunkt eindeutig ist, in welcher Position sich der Gegenanschlag bei dieser Geschwindigkeit befindet. Man braucht also nur noch die Kraftquelle einzuschalten und der Gegenanschlag wird zur richtigen Zeit seine Kraft auf den Anschlag ausüben.

Es ist zu beachten, dass die in den einzelnen Ausführungsbeispielen beschriebenen Konstruktionsmerkmale gegenüber vergleichbaren Merkmalen in anderen Ausführungsbeispielen ausgetauscht werden können. Die vorliegende Erfindung gibt zu der bestehenden Aufgabe weiterhin Lösungen an, die sich besonders durch ihrer Raum sparende Ausführung auszeichnen.

Wichtig ist es auch, dass diese nicht darauf beschränkt ist, einen Fahrer auf die geeignete oder vorgeschriebene Geschwindigkeit eines Fahrzeugs hin zu führen, in dem der Fahrer bei der Betätigung des Gas-Pedals vor der Überschreitung der notwendigen Geschwindigkeit gewarnt wird oder dem Fahrer der Eindruck vermittelt wird, dass Gaspedal habe schon die von ihm gewünschte Stellung erreicht. Vielmehr ist der Gegenstand der Erfindung auch zur Betätigung anderer Steuerorgane des Fahrzeugs wie beispielsweise des Bremspedals vorteilhaft einsetzbar. Dabei kann die das Bremspedal rückstellende zusätzliche Kraft nicht nur von der geeigneten Betätigung der Bremse selbst (beispielsweise beim Anfahren) abhängig sein. Vielmehr kann die rückstellende zusätzliche Kraft am Bremspedal (oder auch am Gas-Pedal) auch durch fahrdynamische Parameter gesteuert werden wie beispielsweise bei ESP, wenn ein Fahrer zu stark bremsen will oder zu schnell in eine Kurve fahren möchte. Der Aufbau der erfindungsgemäßen Vorrichtungen wird im übrigen besonders einfach, wenn der Bremsvorgang oder die Änderung der Geschwindigkeit nicht direkt in das Pedal eingeleitet wird sondern die Pedalstellung mit Hilfe von Sensoren abgetastet wird, wie dies beispielsweise bei einem elektromechanisch oder elektrohydraulisch arbeitenden Bremssystem der Fall ist.

Die in den Ausführungsbeispielen getroffene Anordnung ist aber auch hervorragend geeignet den Fahrer dahin zuführen, dass er das Gas-Pedal in optimaler Weise bedient. Will beispielsweise ein Fahrer in seinem Fahrzeug in einer schwierigen Situation zu stark Gas geben, indem er mit einer zu großen Kraft das Gaspedal bedient, so ist es durch eine elektronische Steuerung möglich in Abhängigkeit von den dynamischen Fahrzeugparametern die Betätigung des Gaspedals mit einer hemmenden oder sogar rückstellenden Kraft zu versehen, so dass dem Fahrer der Eindruck vermittelt wird, das Gaspedal habe schon die Stellung eingenommen, die seinem (das Fahrzeug gefährdenden) Eingabewunsch entspricht. Eine gefährliche Betätigung des Bremspedals kann auf analoge Weise behoben werden. Auf diese Weise kann der Fahrer zu einem disziplinierten Fahrstil angehalten werden. Die hemmende Kraft bei der Betätigung des Pedals beziehungsweise die der Pedalkraft des Fahrers entgegenwirkende Kraft wird regelmäßig durch die Kraft eines Elektromotors herbeigeführt. Zur Erzeugung eines entsprechenden Magnetfeldes wird wiederum ein entsprechend großer Strom einer geeigneten Motor-Spule zugeführt. Die Auslösung dieses Vorgangs geschieht durch das Ausgangssignal einer Steuerung oder Regelung, welches durch die Fahrzeug-Dynamik anzeigende Parameter angesteuert wird. Das Ausgangssignal der Steuerung kann aber auch durch extern zugeführte Signale ausgelöst werden, etwa durch eine Anordnung, die in Verbindung mit einer Geschwindigkeitsbeschränkung an einer Fahrstrecke angeordnet wird.

Die Erfindung wird nachfolgend anhand von Ausführungsbeispielen beschrieben, die in der Zeichnung dargestellt sind. In der Zeichnung zeigen
Figur 1a und 1b ein erstes Ausführungsbeispiel
Figur 2 ein zweites Ausführungsbeispiel
Figur 3 ein drittes Ausführungsbeispiel
Figur 4a bis Figur 4c ein viertes Ausführungsbeispiel
Figur 5a und Fig. 5b ein fünftes Ausführungsbeispiel
Figur 6 ein sechstes Ausführungsbeispiel
Figur 7 ein siebentes Ausführungsbeispiel
Figur 8a und Figur 8b ein achtes Ausführungsbeispiel und
Figur 9 ein neuntes Ausführungsbeispiel.

Die Beschreibung der einzelnen Ausführungsbeispiele ist nun jeweils derart aufgebaut, dass eingangs bestehende Lösungsvorschläge diskutiert werden und danach die verbessernden Merkmale des jeweiligen Ausführungsbeispiels erläutert werden. Schließlich werden die mit dem jeweiligen Ausführungsbeispiel erreichten Vorteile erläutert und dann der wesentliche Vorteil des jeweiligen Ausführungsbeispiels angegeben sowie Möglichkeiten der Abänderung im Rahmen des Ausführungsbeispiels erläutert. In den einzelnen Ausführungsbeispielen einander entsprechende Teile besitzen das gleiche Bezugszeichen. Soweit also ein Bezugszeichen innerhalb eines einzelnen Ausführungsbeispiels nicht gesondert erläutert wird können die Ausführungen zu diesen Bezugszeichen in anderen Ausführungsbeispielen analog herangezogen werden.

Im Normalzustand ist die hohle Spindel 5 (nachfolgend vielfach auch als Spindel-Hülse 5 bezeichnet) wie in Fig. 1a angedeutet, in ihrer oberen Endstellung. Die von dem Seil 8 nach oben gerichtete Kraft wird über eine Hülse 2 und eine als Druckfeder ausgestalteten Feder 9 auf eine innere Anschlag-Hülse 107 übertragen. Dabei kann man sich die Druckfeder 9 als Hohlzylinder vorstellen, da sie sehr steif ist. Somit wird im Ergebnis die das Seil 9 nach oben ziehende Kraft auf die Rückzug-Feder 4 übertragen.

Die Funktionsweise des Ausführungsbeispiels 1 gem. Fig. 1a und 1b ist bei aktivem Pedal wie folgt.

Bei der aktiven FFP-Funktion ist es notwendig jederzeit das Gaspedal 7 betätigen zu können. Aus diesem Grund ist eine Übertretfunktion dann notwendig, wenn das Gaspedal aktiv zurückgestellt wird, der Fahrer aber dennoch beschleunigen will. Der E-Motor 1 treibt eine Kugelgewindemutter beziehungsweise Gewindehülse 11 an, hier mittels eines Zahnriemenantriebes 6, wobei die Spindel 5 gegen die Anschlagshülse 106 fährt (siehe Anlagestelle 10 in Fig. 1a), und somit über die Seilzughülse 2 am Seil 8 zieht. Die Kraft wirkt auf das Gaspedal. Anders ausgedrückt, für den Fall, daß eine zusätzliche entgegen der auf das Pedal eingespeisten Kraft wirkende Kraft gefordert wird, treibt gem. Fig 1b ein Motor den Zahnriemen 6 an, so daß die Spindel 5 in der Zeichnung nach unten bewegt wird. Dabei nimmt sie die Anschlag-Hülse 107 mit, die über die steife Feder 9 und die Seilzug-Hülse 2 das Seil 8 nach unten zieht. Es wirkt also die Kraft des Motors 1 parallel zu der Kraft der Rückzugfeder 4.

Der Fahrer kann jederzeit das Gaspedal so stark niedertreten (übertreten) und somit den Sensor betätigen, daß die Vorspannkraft der vorgespannten Druckfeder 9"zusammenbricht" und somit wieder Hub zuläßt.

Das eine der beiden Seile 8 ist über die Hülsen 2, 107 kraftschlüssig mit einer der beiden Rückzugsfedern 4 verbunden. Das andere Seil bleibt hiervon unberührt. Ebenso wie bei den Ausführungsbeispielen nach Fig. 2 und 3 ist die äußere Feder 9 der beiden gegeneinander verschachtelten Federn 9, 4 sehr steif.

Schließlich kann der Fall eintreten, daß der Fahrer die rückstellende Kraft überwinden will (übertreten), wodurch dann die entsprechende Winkel- Stellung für die Einstellung des Gashebels für das Fahrzeug erreicht werden kann. Hierdurch wird der Motor entgegen seiner eigentlichen Drehrichtung reversiert. Blockieren der Motor oder das Getriebe oder sind die Trägheitskräfte infolge hoher Betätigungsgeschwindigkeiten zu groß, so gibt die Druckfeder 9 nach. Für den Normalfall gilt, daß durch die Kraft des Fahrers über die steife Feder 9 die Spindel ein Stück nach oben verschoben wird. Das kann dann passieren, wenn der Antrieb der Spindel nicht selbst hemmend ist. Dabei kann durch die Längsbewegung der Spindel die Spindel-Mutter 11 in Drehbewegung gesetzt werden, wobei diese Drehbewegung über den Zahnriemen 6 auf den Motor 1 übertragen wird, der hierdurch angetrieben wird. Voraussetzung für diese Konstruktion ist, daß die Spindel 5 längs beweglich aber nicht drehbar gelagert ist während die Spindel-Mutter 11 drehbar aber nicht längs verschiebbar angeordnet ist. Für das Ausführungsbeispiels ist folgendes besonders wichtig: Entkoppelung des Zugseils und Zwischenschaltung eines, nach einer bestimmten Kraft wirkenden nachgiebigen Bauteils, radial um das aktive Betätigungsglied herum angeordnet.

### Vorteile

Das Packaging Problem wird durch die Anordnung der Übertretfeder 9 um die Kugelgewindespindel herum gelöst (Schachtelung). Eine Hintereinanderanordnung wäre an dieser Stelle (mehrere Hübe hintereinander) nicht möglich.
Betriebssichere Lösung durch Verwendung im Einzelnen einfacher Bauteile.

### Preiswert

Durch Riementrieb leise, keine Übertragung von Schwingungen Die Teile können aus Kunststoff gefertigt werden.
Ein Drehwinkelsensor kann an der vom Kunden vorgesehenen Stelle bleiben

Spindelmutter als Vielfunktionsteil mit integriertem Axiallager und Antriebsfunktion durch E-Motor Modulbauweise möglich.

### Ausführungsbeispiel 2 gem. Fig. 2

Dieses Ausführungsbeispiel hat hinsichtlich seiner normalen Funktionen den weiter oben schon beschriebenen üblichen Aufbau und arbeitet wie folgt. Im Ausgangszustand ist die Spindel des als Kugelgewindegetriebe ausgestalteten Getriebes 13 in Figur 2 ganz nach links gefahren und es liegt die normale Pedalfunktion vor, wie sie weiter oben schon vielfach beschrieben wurde. Die Spindel 5 ist rotatorisch fixiert und kann sich nur in axialer Richtung bewegen. Für die Funktion darf das Getriebe 13 nicht selbsthemmend sein. Ist die Force-Feedback-Funktion zur Erzeugung einer zusätzliche Rückstellkraft (im folgenden vielfach als Stellkraft bezeichnet) eingeschaltet, dreht der Motor 1 über Kegelräder eine Gewindehülse und hierdurch fährt die Spindel 5 an die Position, bei der die Stellung des Pedals 7 der voreingestellten soll-Geschwindigkeit entspricht. Wird die voreingestellte Geschwindigkeit und damit die Sollstellung des Pedals übertreten, wird die Spindel vom Pedal 7 nach links gedrückt und der Motor reversiert. Durch die fehlende Selbsthemmung erfüllt die aus Motor 1 und Getriebe 13 bestehende Einrichtung somit die gleichzeitig die Funktion des Übertretens. Durch die wirksame Kraft des Motors 1 wird die Pedalkraft auf den voreingestellten Wert erhöht. Wird die Force-Feedback-Funktion ausgeschaltet, fährt die Spindel durch eine entsprechende Ansteuerung des Motors wieder in die Ausgangsposition.

Über den Koppelhebel 50 die Kurvenscheibe 3 und die Rückstellfeder 4 wird die übliche Rückstellkraft für das Pedal 7 aufgebracht. Die zusätzliche Kraft gegen das Pedal 7 entsteht dadurch, daß das Pedal das Ende der Spindel 5 erreicht und auf dieser aufsetzt. Da das Gewinde nicht selbst hemmend ist, wird die Spindel in ihrer Längsrichtung verschoben wobei über die vielfach als Spindelmutter bezeichnete Gewindehülse 11 eine Rotationskraft auf die Motor - Welle ausgeübt wird. Der Motor wird also nicht nur zur Verstellung der Spindel in ihrer Längsrichtung und damit zur Verstellung des Anschlags ausgenutzt. Zusätzlich wird durch den Motor auch noch eine Gegenkraft ausgeübt. Diese läßt sich noch dadurch verstärken, in dem bei einem von dem Pedal auf den Motor ausgeübten Drehmoment der Motor elektrisch derart geschaltet wird, daß er aktiv gegenüber diesem Drehmoment einen Widerstand leistet. Praktisch kann das bedeuten, daß man eine entsprechende Spannung an die Wicklungen des Motors anlegt. Die Feder 9 dient zur Sicherheit der erfindungsgemäßen Vorrichtung. Sollte der Motor blockieren so ist es immer noch möglich die Spindel 5 gegen die Feder 9 axial zu verschieben und damit das Pedal 7 übertreten zu können. Für das hier beschriebene Prinzip ist folgendes sehr wichtig.
Die Rotationsbewegung des Elektromotors wird in eine Translationsbewegung umgewandelt, welche die Pedalbewegung in Richtung Volllaststellung behindert.

### Vorteile:

Sehr guter Wirkungsgrad des Kugelumlaufgetriebes Gutes Packaging
Die Teile können aus Kunststoff gefertigt werden.

### Ausführungsbeispiel 3 gem. Fig. 3

Hinsichtlich der normalen Funktionen des Pedalmoduls zeigt Fig. 3 wiederum den üblichen Aufbau. Bei dieser erfindungsgemäßen Lösung wird die Kraft für die Force-Feedback-Funktion in eines der das Pedal 7 zurückholenden Seile 8 für die standardmäßig eingebauten Pedalrückzugfedern 4 eingeleitet. Hierfür wird an dem Seil 8 ein Anschlag 87 angebracht. Die Spindel des Kugelumlaufgetriebes 13 ist als Hohlwelle ausgeführt und hat am oberen Ende einen verengten Querschnitt, über den das Seil 8 mit dem Anschlag 87 nach unten gezogen werden kann.

Bei ausgeschalteter Force-Feedback-Funktion wird die Spindel 13 in Fig. 3 durch eine entsprechende Ansteuerung des Motors 1 ganz nach oben gefahren, so dass der Anschlag 87 am Seil 8 mit der Spindel 5 nicht in Eingriff kommen kann. Man kann in diesem Fall die obere, eine große Federkonstante aufweisende Feder 9 als Stab ansehen, der ein Stück weit in die hohle Spindel eintaucht.

Ist die Force-Feedback-Funktion eingeschaltet, fährt die wegen der durch den Elektromotor in Drehung versetzten Gewindehülse 11 nach unten fahrende Spindel an die Position, bei der die Pedalstellung der voreingestellten Geschwindigkeit entspricht. Wird die voreingestellte Geschwindigkeit und damit die Sollstellung des Pedals übertreten, wird die Spindel nach oben gezogen und der Motor reversiert. Auf diese Weise wird die benötigte Pedalkraft auf den voreingestellten Wert erhöht. Um bei einem Ausfall der Force-Feedback-Einheit, zum Beispiel der Blockade des Motors 1, die Standardfunktion des Gaspedals zu gewährleisten, ist die Feder 9 zwischen dem Seil und dem Anschlag angebracht. Die Vorspannung der Feder ist so hoch, dass eine Auslenkung dieser erst bei einer Kraft höher der maximalen Force-Feedback-Kraft möglich ist. Die Position der Feder 9 für die Übertretfunktion und Sicherheitsfunktionen ist nicht auf die im Bild dargestellte Position festgelegt. Statt einem Kugelumlaufgetriebe kann jedes andere Getriebe verwendet werden, dass eine Rotationsbewegung in eine Translationsbewegung umwandelt.

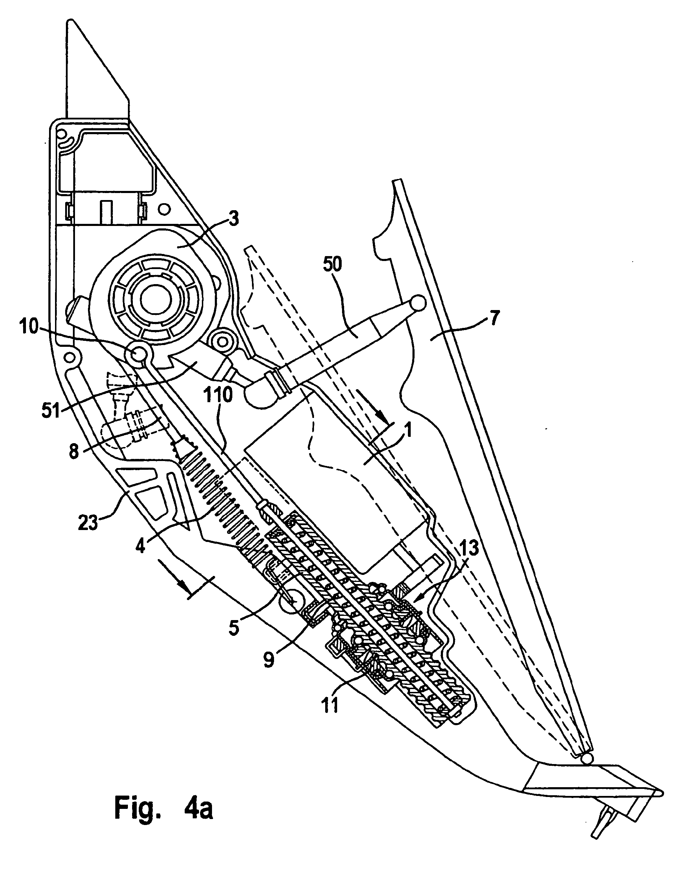

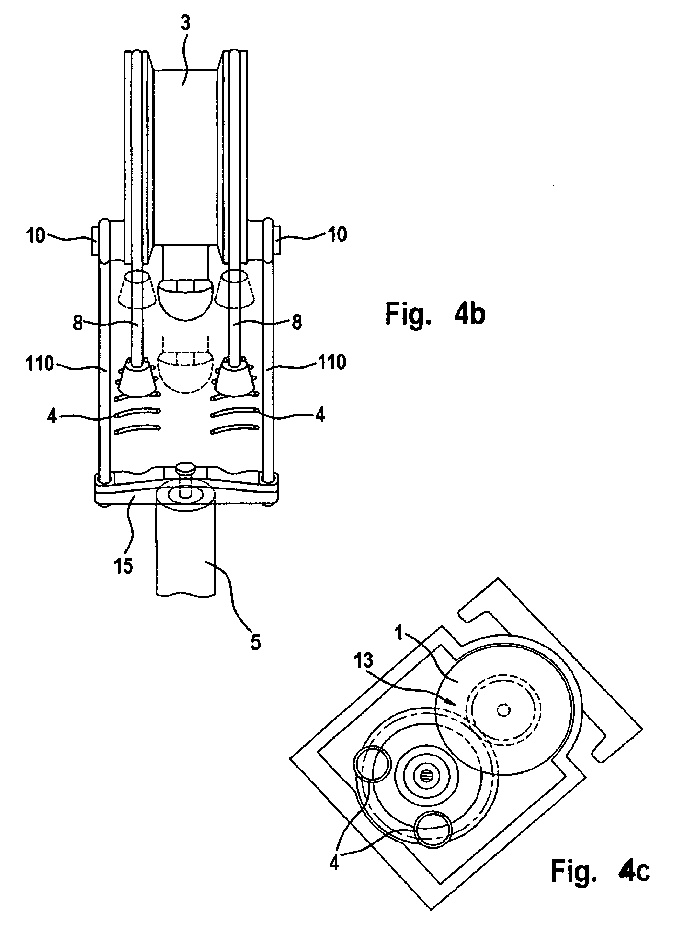

### Ausführungsbeispiel 4 gem. Fig. 4a, 4b und 4c

Das Ausführungsbeispiel nach den Figuren 4a bis 4c lehnt sich an das in Figur 1 beschriebene Ausführungsbeispiel 1 an. Die dort gemachten Ausführungen gelten also auch für das nachfolgend beschriebene Ausführungsbeispiel 4 der vorliegenden Anmeldung soweit nicht Abweichungen betroffen sind, die nachfolgend beschrieben werden. Bei dem Ausführungsbeispiel 1 greifen die übliche Rückzugfeder 4 und die Feder 9, die im Bedarfsfall eine zusätzliche, in Richtung Rückstellung des Pedals wirkende Kraft aufbringt, hintereinander an. Das heißt die beiden Federn sind wirkungsmäßig in Reihe geschaltet und wirken über ein einziges Rückzugsseil 8 auf die Kurvenscheibe 3, durch welche über ein Gestänge 50, 51 die Rückzugskraft auf das Pedal 7 übertragen wird. Da die übliche Rückzugsfeder 4 in der bekannten Pedaleinheit auf die Kurvenscheibe 3 abgestimmt ist, beispielsweise durch einen bestimmten Umschlingungswinkel, der eine vorgegebene Reibkraft auf die Kurvenscheibe ergibt, wird durch die Rückholfeder die vorbestimmte Abstimmung der Pedaleinheit bei abgeschalteter FFP-Funktion nicht geändert, was auch für Reklamations-Ansprüche wichtig ist. Die Übertretfeder 9 , die weiter unten noch näher erläutert wird, soll ein Übertreten der FFP-Funktion ermöglichen.

Figur 4a und 4c zeigen zwei zueinander parallel angeordnete Rückstellfedern 4, welche über Rückzugsseile 8 an der Kurvenscheibe 3 angreifen, welche wiederum über das Gestänge 50,51 auf das Pedal -Brett 7 einwirkt. Die Rückstellfedern 4 sind an einem Gehäuse 23 verankert und greifen an ihrem entgegengesetzten Ende beide jeweils an einem Rückzugsseil 8 an. Das bisher Gesagte entspricht dem üblichen Aufbau. In neuartiger Weise greift über Rückstellungsseile 110 eine Übertretfeder 9 über zwei exzentrisch angeordneten Bolzen 10 an der Kurvenscheibe 3 an. Die zusätzliche Stellkraft wird bei wirksamer FFP-Funktion von dem Motor 1 über das Getriebe 13 auf die Gewindehülse 11 übertragen. Von der Gewindehülse 11 gelangt die Kraft über die hohle Spindel 5 auf die steife Übertretfeder 9, die mit ihrem in Figur 4a unteren Ende mittelbar an dem Rückstellungsseil 110 angreift und damit über die Kurvenscheibe 3 in Rückstellungsrichtung auf das Pedal 7 einwirkt. Die Übertretfeder 9 wird belastet durch die hohle Spindel 5, die nicht drehbar aber in ihrer Längsrichtung verschiebbar in dem Gehäuse 23 gelagert ist. In ihrer nicht wirksamen Normalstellung befindet sich die hohle Spindel 5 in Figur 4a und Figur 4c weit oben, wie dies gestrichelt dargestellt ist.

Wird die axial nicht verschiebbar aber drehbar gelagerte Gewindemutter beziehungsweise Gewindehülse 11 bei der FFP-Funktion durch einen Elektromotor 1 über ein Getriebe 13 gedreht, so wird die Spindel 5 in den Figuren 4 nach unten bewegt und zieht somit das obere Ende der steifen Rückholfeder 9 nach unten, so daß eine Kraft über die Kurvenscheibe 3 in rückwärts gerichteter Bewegung auf das Brett 7 des Pedals ausgeübt wird. Diese Kraft wirkt unabhängig von der Rückzugfeder 1.

Ein Übertreten der zusätzlichen Stellkraft durch das Pedal 7 ist in der weiter oben schon vielfach beschriebenen Weise dadurch möglich, daß durch das Pedal 7 über die Rückstellungsseile 110 und die Feder 9 die Spindel 5 in Figur 14 nach oben gezogen wird, wobei über das Getriebe 13 der Motor dann entgegen seiner Antriebsrichtung gedreht wird.

Sollte nun der Motor 1 oder das Getriebe 13 beim Übertreten blockieren oder das Pedal 7 so schnell übertreten werden, daß die genannten Baugruppen dieser Bewegung nicht folgen können so gibt in dieser Notsituation die Feder 9 nach und macht so dennoch eine Bewegung des Pedals 7 (entgegen dem Uhrzeigersinn) i. S. der Erhöhung der Fahrgeschwindigkeit möglich. Dies geschieht dadurch, daß durch das Übertreten eine Kraft aufgebracht wird, welche die steife Rückholfeder 9 zusammenzieht. Dabei greifen die beiden Rückstellungsseile 110 über einen Steg 15 (Fig. 4b) an der Rückholfeder 9 an, die so gleichmäßig auf beide Seile wirkt.

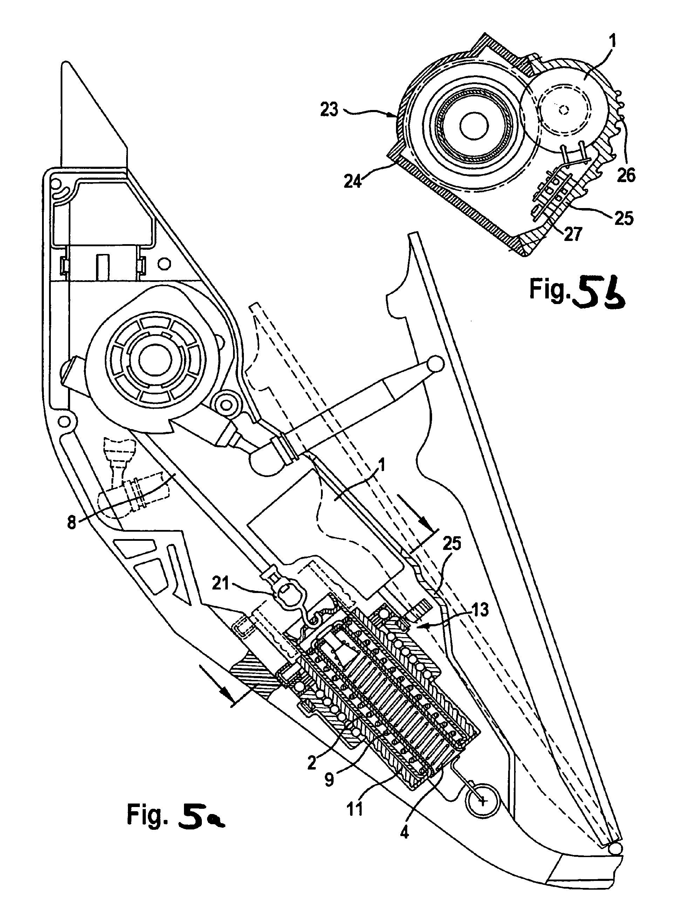

### Ausführungsbeispiel 5 gem. Fig. 5a und Figur 5b

Figur 5a und Figur 5b beschreiben ein fünftes Ausführungsbeispiel, welches von dem Ausführungsbeispiel nach Figur 1 ausgeht. Bei diesem Ausführungsbeispiel sind die Übertretfeder 9 und die übliche Rückzugfeder 4 ineinander verschachtelt, wobei diese beiden Federn aber wirkungsmäßig in Reihe arbeiten. Der Aufbau dieser Anordnung und deren Wirkungsweise ist in der zuletzt genannten deutschen Patentanmeldung im Zusammenhang mit den dort gezeigten Figuren 1a und 1b ausführlich beschrieben. Eine Hülse 2 für die Feder 9 wirkt beim vorliegenden Ausführungsbeispiel über ein Verbindungsglied 21 auf die Übertretfeder 9. Das Verbindungsglied 21 ist in Längsrichtung des Rückzugseiles 8 verformbar. Hier durch läßt sich die wirksame Länge des Rückzugseiles 8 einstellen und damit die Einrichtung justieren.

Figur 5b zeigt einen Schnitt durch den Elektromotor 1, das Getriebe 13 und die Gewindehülse 11 aufnehmende Gehäuse 23 des Ausführungsbeispiels nach Figur 5a. Das Gehäuse besteht aus einem ersten Gehäuseteil 24 und einem zweiten Gehäuseteil 25. Das erste Gehäuseteil ist aus einem leichten und einfach zu formenden Kunststoff gebildet. Das zweite Gehäuseteil 25 ist aus einem festen Material, welches Wärme gut leitet wie beispielsweise Eisen oder Aluminium. Hierdurch kann die von dem Motor 1 abgegebene Wärme gut in die Umgebung abgeführt werden. Durch das Gehäuse 23 ergibt sich eine vormontierte Einheit, welche einfach in das Pedal-Gehäuse eingesetzt werden kann.

Hierdurch ergeben sich folgende Vorteile: Gehäusedeckel 25 aus Metall zur Ein-/Ableitung der Motorwärme und Abgabemöglichkeit an die Außenluft. Kühlwirkung verstärkt durch Kühlrippen 26 und/oder Wärmeleitpaste zwischen Motor und Deckel. Platinen (Elektronik) 27 und Motor 1 sind vorteilhaft im als Deckel dienenden zweiten Gehäuseteil 25 integriert. Das Verbindungsglied 21 in Figur 5a ist verformbar und dient so zum Toleranzausgleich nach erfolgter Montage. Man erhält eine Ableitung der Motorwärme durch besondere konstruktive Maßnahmen und Anordnung des Motors sowie eine konstengünstige Integration und Montage der Elektronik.

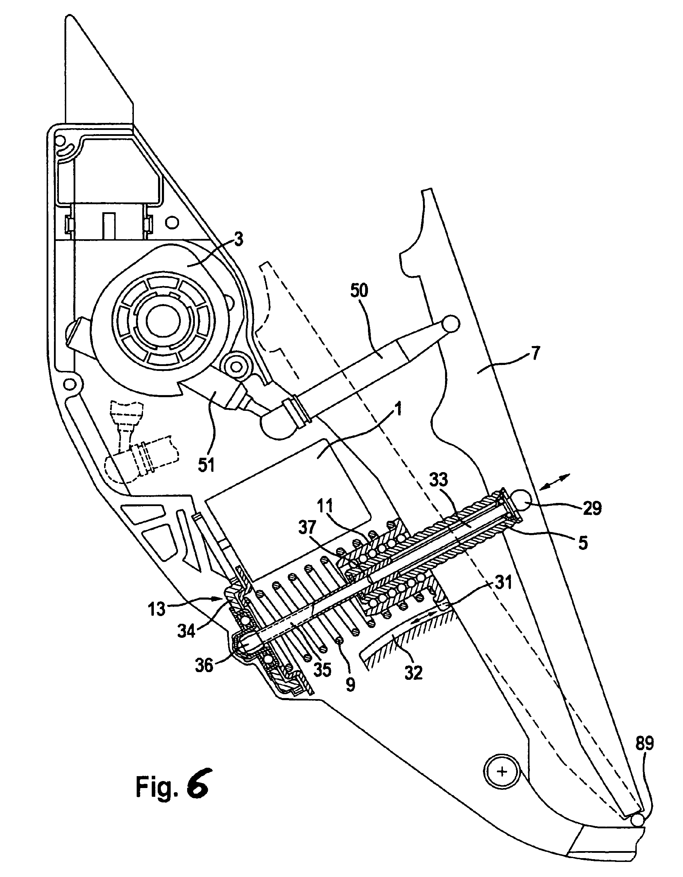

### Ausführungsbeispiel 6 gem. Fig. 6

Figur 6 beschreibt ein sechstes Ausführungsbeispiel wie es ähnlich im Zusammenhang mit Figur 2 beschrieben ist.

Ein nachfolgend vielfach als Gewindestift bezeichnete Spindel 5 ist mit ihrem einen Ende 29 in dem Brett des Pedals 7 gelagert. Das Brett 7 ist um die Achse 89 schwenkbar. Die Spindel 5 ist in ihrer Länge verschiebbar und drehbar gelagert. Demgegenüber ist die eine Gewindehülse 11 nicht drehbar und axial nicht verschiebbar gelagert. Die Feder 9 hat, wie bei den vorangegangenen Ausführungsbeispielen auch, die Aufgabe das Übertreten der rückholenden Kraft bei einem oben beschriebenen Notfall zu ermöglichen.

Läuft der Motor 1 an, so wird über das Getriebe 13 die Spindel 5 in Drehung versetzt, so daß sich die Spindel aus der ortsfesten Gewindemutter 12 heraus schraubt und über das Ende 29 der Verlängerung 33 gegen das Brett des Pedals 7 drückt. Demgegenüber greift das aus Koppelhebel 50 und Drehhebel 51 bestehende Gestänge über die Kurvenscheibe 3 getrennt an dem Brett 7 an. Für das vorliegende Ausführungsbeispiel wichtig ist nun, daß im Normalfall die Gewindehülse 11 zwar ortsfest angeordnet ist. Dabei ist sie in Längsrichtung der Spindel 5 nur dann verschiebbar, wenn die auf das Brett 7 ausgeübte Kraft in der Lage ist, die Übertretfeder 9 zu überwinden. Hierzu ragt ein Ansatz 31 an der Gewindehülse 11 in eine ortsfeste Führungsnut 32. Die Führungsnut 32 hat die Form eines Kreisabschnitts, so daß der Ansatz 31 der Schwenkbewegung des Brettes 7 um die Achse 89 folgen kann. Damit das Ende 29 der Spindel 5 der Drehbewegung der Spindel 5 nicht zu folgen braucht, ist dieses drehbar in dieser Spindel gelagert. Eine Verlängerung 33 ist teleskopförmig in einem Rohr 35 geführt, wobei ein Getriebe 13 über das Rohr die hohle Spindel 5 in Drehung versetzt, da das Rohr 35 gegen die Spindel 5 drehfest aber axial verschiebbar gelagert ist. Als Vorteil ergibt sich die Lösung des Packaging Problems durch eine geschachtelte parallel zum Kugelgewindetrieb angeordnete Übertretfunktion.

Mit anderen Worten arbeitet das sechste Ausführungsbeispiel gemäß Figur 6 wie folgt. Rückstellung/Krafteinleitung auf das Gaspedal 7 erfolgt durch Kugelgewindegetiebe (KGT), bei dem die Gewindehülse 11 verdrehsicher im Gehäuse geführt wird und die Spindel 5 antreibt. Die Führungsnut 32 läst eine Bogenbewegung (bedingt durch die Kreisbewegung des Pedals 7 um Achse 89) der Gewindehülse 11 zu, falls das Gaspedal 7 übertreten wird. Das Rohr 35 ist mit dem Zahnrad 34 drehmomentfest verbunden, wobei die, vom Pedal übertragene Pedalbewegung z. B. durch einen balligen Sechskant 36 ausgeglichen werden kann. In der von dem Motor 1 über das Getriebe 13 und das Rohr 35 angetriebenen Spindel 5 ist ebenfalls eine Drehmomentübertragungsmöglichkeit (z. B. Sechskantprofil 37) vorgesehen. Die ausgefahrene Spindel kann bei einer Notsituation (z. B. Blockieren des Getriebes oder des Motors) durch die parallel angeordnete Übertretfeder 9 übertreten werden. Beim normalen Übertreten hält die steife Feder 9 die Gewindehülse 11 in ihrer Lage axial fest und über die Spindel 5 wird der Motor entgegen seiner Antriebsrichtung gedreht. Das einen Kopf bildende Ende 29 ist mit dem Pedal 7 verdrehsicher verbunden und ist von der Spindel 5 axial im Falle einer Fehlfunktion lösbar.

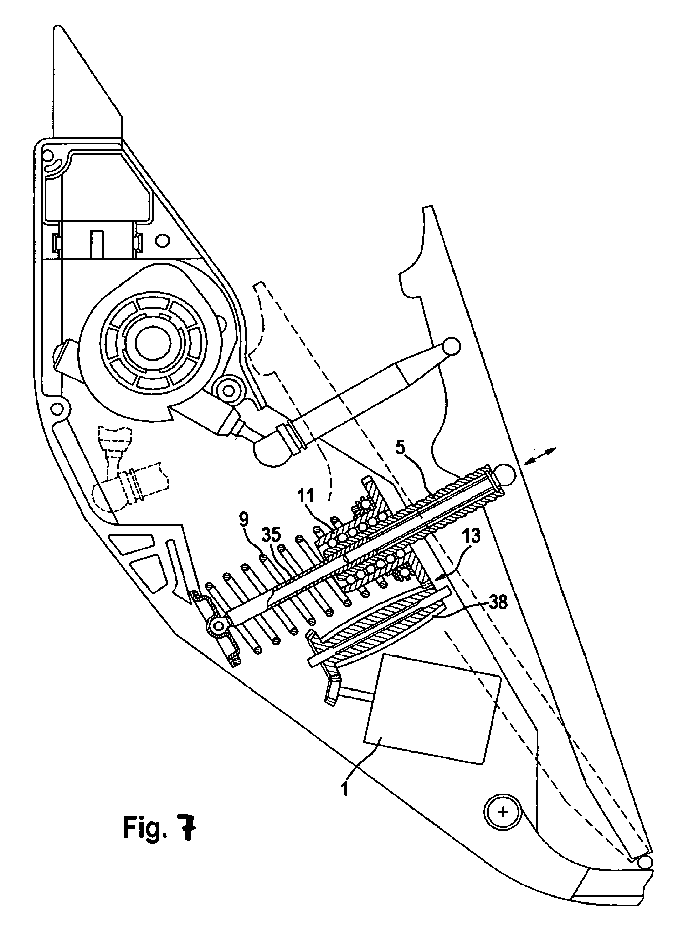

### Ausführungsbeispielen 7 gem. Fig. 7

Eine Abwandlung des sechsten Ausführungsbeispiels nach Figur 6 zeigt Figur 7 als siebtes Ausführungsbeispiel. Das Getriebe 13 weist hierbei ein gekrümmtes Zahnrad (Zahn -Tonne ) 38 auf, durch welches es möglich ist, die Gewinde Hülse 11 längs ihrer Längsachse entgegen der Kraft der Rückholfeder 9 zu verschieben, ohne daß sie außer Eingriff zu dem Zahnrad 38 kommt. Bei dem Ausführungsbeispiel nach Figur 7 ist das Rohr 35 um sein Ende schwenkbar ansonsten aber unbeweglich dem Gehäuse zugeordnet. Da sich bei dem vorliegenden Ausführungsbeispiel die Gewinde Hülse 11 dreht muß dafür gesorgt werden, daß die Spindel 5 nicht drehbar aber in ihrer Längsrichtung verschiebbar in dem Rohr 35 gelagert ( z. B. durch Vierkant) ist. Daraus folgt als Ergebnis: die Rückstellung/Krafteinleitung auf das Gaspedal 7 erfolgt durch Kugelgewindegetriebe (KGT), bei dem die Gewinde Hülse 11 durch eine Zahntonne (38) getrieben und durch den E-Motor 1 angetrieben wird. Die Zahntonne ermöglicht ein Übertreten des Spindeltriebs (Pendelbewegung) bei gleichzeitigem Antrieb.

Für die Ausführungsbeispiel nach den Figuren 5a bis Figur 7 hat man insgesamt folgende Vorteile: · Preiswerte einfach Teile, · Modulbauweise, · sichere Konzepte, · geringes Einbaumaß (nur 2 x Hub und Kugelmutterhöhe). Insbesondere bei der Ausführungsform nach Figur 18 hatte man keine Einleitung von Antriebsmomenten in die Spindel.

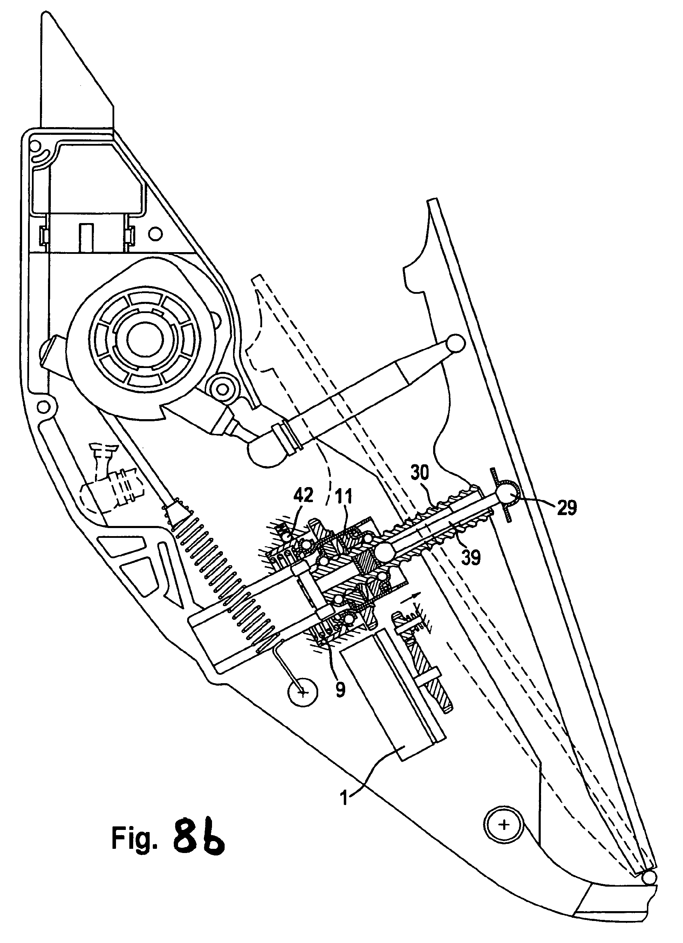

### Ausführungsbeispiel 8 gem. Fig. 8a und Fig. 8b

Die Figuren 8a und 8b zeigen ein achtes Ausführungsbeispiel. Dabei ist in Figur 8a die erfindungsgemäße Vorrichtung in ihrem Normalzustand gezeigt während Figur 8b die erfindungsgemäße Ausführungsform im Zustand des Übertretens darstellt, bei der die durch die rückholende Einrichtung ausgeübte, entgegen der Kraft des Fußes gerichtete Kraft durch den Fahrer überwunden wird. Das Ausführungsbeispiel nach den Figuren 8a und 8b ist den Ausführungsbeispielen nach den Figuren 6 und 7 sehr ähnlich so daß die dort gegebene Beschreibung analog auf das vorliegende Ausführungsbeispiel anwendbar ist.

Die Spindel 5 ist im vorliegenden Fall in ihrer Längsrichtung verschiebbar aber nicht drehbar gelagert. Ihr kugelförmiges Ende 29 kann sich dem Neigungswinkel des Brettes 7 gegenüber einer in der Spindel 5 befindlichen Betätigungsstange 39 ohne Schwierigkeiten anpassen. Die Stange 39 stützt sich gegenüber dem Boden der zylinderförmigen Ausnehmung in der Spindel 5 über einen Geräuschdämpfer 40 ab, der durch ein leicht nachgiebiges Element gebildet ist. Die Gewindehülse 11 wird über einen Motor 1 und ein Getriebe 13 in Drehung versetzt. Die Gewindehülse 11 ist drehbar und in ihrem Normalzustand in axialer Richtung der Spindel 5 nicht verschiebbar gelagert. Dabei stützt sie sich über ein Kugellager auf einer Rasthülse 41 ab, die durch eine vorgespannte Kugel 112 ortsfest verrastet ist.

Für das vorliegende Ausführungsbeispiel ist nun wesentlich, daß die Gewindehülse 11 durch eine entsprechende Ausübung von Kraft auf das Brett des Pedals 7 zusammen mit der Spindel 5 in deren Längsrichtung verschiebbar ist. Dabei wird über die Stange 39 und den Geräuschdämpfer 40 die Spindel 5 in Figur 2 nach links mitgenommen. Da die Gewindemutter 12 durch den Motor 1 und das Getriebe 13 bei einer Notsituationen möglicherweise festgehalten wird kann sie dann der durch die Spindel 5 ausgeübten Kraft nicht durch eine Drehbewegung ausweichen und wird ebenfalls nach links weggezogen. Durch die so ausgeübte Kraft wird die Rasthülse 41 aus ihrer Verrastung gegenüber der Kugel 42 gerissen und gegen die Kraft der Rückholfeder 9 verschoben. Damit kommt die Verzahnung der Gewindehülse 11 außer Eingriff gegenüber dem Getriebe 13 und wird danach nicht mehr in ihrer Drehbewegung gehindert.

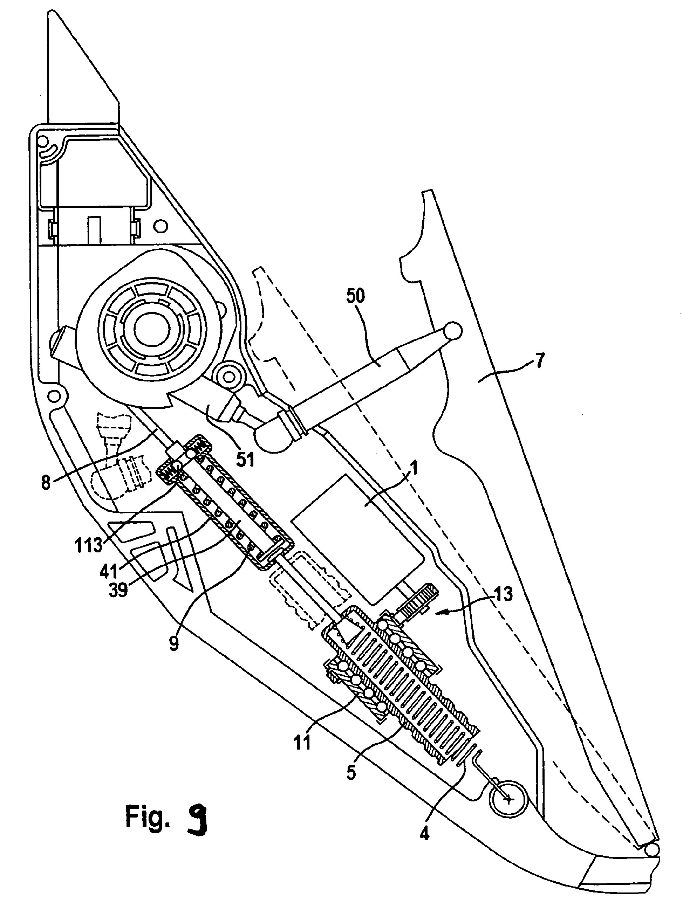

Daraus ergibt sich folgende Arbeitsweise des Ausführungsbeispiels nach Figur 8a und Figur 8b. Bei schneller Betätigung des Gaspedals wird der Antriebsmotor von dem Kugelgewindegetriebe (KGT) 12, 13 entkoppelt. Ab einer konstruktiv festlegbaren Kraft wird der KGT so verschoben, daß der Motor 1 nicht weiter im Eingriff ist und somit ist die Gewindehülse 11 leichter drehbar. Verantwortlich hierfür sind Rastelemente z.B. federbelastete Kugel(n) (42), die ab einer bestimmten Kraft den KGT axial freigeben. Die Druckfeder als Übertretfeder 9 schiebt den KGT in Ausgangslage zurück. Weiterhin ist eine Durchtrittsmöglichkeit in Hubrichtung im Falle einer KGT -Verklemmung gegeben (siehe Figur 3). Ein mögliches Zwischenrad 44 erleichtert das Finden der Zahnlücken. Klöppel (29) gleicht die Drehbewegung des Gaspedals zum KGT aus. Ausführungsbeispiel 9 gem. Fig. 9

In dem neunten Ausführungsbeispiel nach Figur 9 sind die Rückzugfeder 4 und die Übertretfeder 9 nicht nur wirkungsmäßig sondern auch räumlich in Reihe geschaltet. Hierdurch ist es möglich durch eine entsprechende Ausübung einer Kraft auf das Brett des Pedals 7 das Übertreten der das Brett 7 zurück drückenden Kraft zu ermöglichen. Diese zurück drückende Kraft wird, wie schon im Zusammenhang mit Figur 16 beschrieben, von einem Motor 1 über ein Getriebe 13 auf eine Gewindehülse 11 ausgeübt. An dem Ausführungsbeispiel nach Figur 20 ist nun wesentlich, daß die Übertretfeder 9 in einer Rasthülse 45 gehalten ist. Sobald die durch das Brett 7 über das Gestänge 50, 51 und die Kurvenscheibe 3 ausgeübte Kraft auf das Rückzugseil 8 groß genug wird, rastet die mit dem Seil 8 verbundene Betätigungsstange 39 aus ihrer Verrastung mit der Rasthülse 41 aus. Die Verrastung geschieht dabei durch mindestens zwei in der Rasthülse 41 gegenüber der Betätigungsstange 39 axial vorgespannte Kugeln 113. Die Übertretfeder 9, durch die das Übertreten ermöglicht wird, ist dabei so steif gewählt, daß sie nach der Beendigung des Übertretens die Betätigungsstange 39 wieder in ihre Rastlage bringen kann.

Das hier im Zusammenhang mit Figur 9 vorgestellte Prinzip ermöglicht ein schnelles Durchtreten (zum Gasgeben) oder in einer Notsituation wenn Mechanismus blockiert ist. Ein Rastmechanismus (39, 42) hält den Kraftfluß Seil/Zugfeder (8,9) bis zu einer bestimmten Kraft aufrecht. Wird diese Haltekraft überschritten (Übertretfunktion gewünscht), so bricht das Kraftsystem zusammen, die Rastelemente (42) z. B. eine oder mehrere kraftbelastete Kugeln geben das Rastglied (39) frei und ermöglichen so eine Seillose, um das Gasgeben zu ermöglichen. Die Übertretfeder (9) dient zum Positionieren des Rastgliedes in die Ausgangslage. Als besonderer Vorteil ergibt sich die Lösung des Packaging Problems. Sehr wichtig bei diesen Ausführungsbeispielen ist ein geringes Einbaumaß.

## Patentansprüche

1. Vorrichtung zur Steuerung eines Fahrzeugparameters insbesondere der Geschwindigkeit oder der Verzögerung eines Fahrzeugs, welche ein als Pedal (7) ausgestaltetes Steuerorgan aufweist, über welches der Parameter insbesondere die Antriebskraft des Fahrzeugmotors und damit die Geschwindigkeit des Fahrzeugs oder die Bremskraft und damit die Verzögerung des Fahrzeugs einstellbar ist, wobei die durch eine entsprechende Betätigungskraft herbeigeführte Lageänderung des Pedals (7) gegenüber seiner Ausgangslage entgegen einer Rückstellkraft zu einer Erhöhung des Parameters insbesondere der Antriebskraft des Motors oder der Bremskraft der Bremsanlage führt, wobei bei nachlassender Betätigungskraft die Rückstellkraft des Pedals (7) in Richtung seiner Ausgangslage zurückbefördert und wobei ein Stellglied vorgesehen ist, welches in Abhängigkeit von einer oder mehreren vorbestimmten Meßgrößen des Fahrzeugs eine in Rückstellungsrichtung des Pedals (7) wirkende zusätzliche Rückstellkraft aufbringt, die durch einen elektromechanischen Aktuator (1, 13, 5, 11, 9) erzeugt wird, und wobei Übertretmittel (1, 13,9, 160, 217) vorgesehen sind, über welche die zusätzliche Rückstellkraft durch eine hinreichend große Betätigungskraft übertretbar ist, wobei der Aktuator durch ein Stellsignal angesteuert wird, welches von der Abweichung einer Messgröße des Fahrzeugs von einem Sollwert, insbesondere der Fahrgeschwindigkeit von einer vorgegebenen Sollgeschwindigkeit oder Bremskraft von einer zulässigen Bremskraft, ausgelöst wird oder zumindest abhängig ist und dass die zusätzliche Rückstellkraft in Abhängigkeit von der Abweichung des Sollwertes insbesondere der ist-Geschwindigkeit von der soll-Geschwindigkeit auf das Pedal (7) einwirkt, **dadurch gekennzeichnet, dass** Notfallmittel (9, 160) vorgesehen sind, die ein Übertreten des Pedals (7) entgegen der zusätzlichen Rückstellkraft auch dann gestatten, wenn die Übertretmittel (1, 13) eine Blockade aufweisen, wobei als Notfallmittel (9, 160) eine Sicherheits-Feder (9) in den Kraftfluss zwischen Aktuator (1) und Pedal (7) geschaltet ist und dass die Federkonstante dieser Sicherheits-Feder (9) derart ausgewählt ist, dass sie erst dann elastisch nachgibt wenn die auf das Pedal (7) ausgeübte Betätigungskraft eine bestimmte Schwelle überschreitet und dass der Aktuator (1, 13, 5, 11, 9) mit einem Getriebe (13) versehen ist, über welches er die zusätzliche Rückstellkraft an das Pedal (7) abgibt, wobei das Getriebe ein Kugel-Gewinde-Trieb (13) ist, der durch eine Gewinde-Spindel (5) und eine Gewinde-Mutter (11) gebildet ist, wobei die Gewinde-Spindel (5) unmittelbar auf das Pedal (7) einwirkt und dass die Gewinde-Spindel (5) oder die GewindeMutter (11) in axialer Richtung durch die Sicherheits-Feder (9) elastisch gelagert ist.

## Claims

1. Device for controlling a vehicle parameter, in particular the speed or the retardation of a vehicle, which device has a control element which is designed as a pedal (7) and by means of which the parameter, in particular the driving force of the vehicle engine, and with it the speed of the vehicle, or the braking force, and with it the retardation of the vehicle, can be set, the change in position of the pedal (7) with respect to its starting position that is brought about by a corresponding actuating force counter to a restoring force leading to an increase in the parameter, in particular the driving force of the engine or the braking force of the braking system, the restoring force of the pedal (7) returning in the direction of its starting position when the actuating force subsides, and a final control element being provided, which element applies an additional restoring force, acting in the restoring direction of the pedal (7), on the basis of one or more predetermined measured variables of the vehicle, the restoring force being produced by an electromechanical actuator (1, 13, 5, 11, 9), and overriding means (1, 13, 9, 160, 217) being provided, by which means the additional restoring force can be overridden by a sufficiently great actuating force, the actuator being activated by a setting signal, which is triggered by, or at least dependent on, the deviation of a measured variable of the vehicle from a set value, in particular the driving speed from a prescribed set speed or the braking force from a permissible braking force, in that the additional restoring force acts on the pedal (7) on the basis of the deviation of the set value, in particular of the actual speed from the set speed,
**characterized in that** emergency means (9, 160) which allow overriding of the pedal (7) counter to the additional restoring force even when the overriding means (1, 13) have a blockage are provided, a safety spring (9) being arranged as an emergency means (9, 160) in the flux of force between the actuator (1) and the pedal (7) and **in that** the spring constant of this safety spring (9) is selected such that it only gives way elastically when the actuating force exerted on the pedal (7) exceeds a specific threshold and **in that** the actuator (1, 13, 5, 11, 9) is provided with a gear mechanism (13), by means of which it delivers the additional restoring force to the pedal (7), the gear mechanism being a ball-screw drive (13), which is formed by a threaded spindle (5) and a threaded nut (11), the threaded spindle (5) acting directly on the pedal (7), and **in that** the threaded spindle (5) or the threaded nut (11) is mounted flexibly in the axial direction by the safety spring (9).

## Revendications

1. Dispositif de commande d'un paramètre d'un véhicule, en particulier de la vitesse ou du ralentissement d'un véhicule, qui présente un organe de commande configuré comme pédale (7), par lequel le paramètre, en particulier la force d'entraînement du moteur du véhicule et donc la vitesse du véhicule ou la force de freinage et donc le ralentissement du véhicule peuvent être ajustés,
la modification de la position de la pédale (7) par rapport à sa position initiale entraînée par l'application d'une force d'actionnement et en opposition à une force de rappel entraînant une augmentation du paramètre, en particulier de la force d'entraînement du moteur ou de la force de freinage de l'installation de freinage,
la force de rappel ramenant la pédale (7) en direction de sa position initiale lorsque la force d'actionnement cesse d'être appliquée,
un organe de réglage étant prévu pour exercer une force supplémentaire de rappel qui agit dans la direction de rappel de la pédale (7) en fonction d'une ou de plusieurs grandeurs prédéterminées de mesure du véhicule, la force supplémentaire de rappel étant délivrée par un actionneur électromécanique (1, 13, 5, 11, 9),
des moyens de dérogation (1, 13, 9, 160, 217) par lesquels la force de rappel supplémentaire peut être surmontée par une force d'actionnement suffisamment grande étant prévus,
l'actionneur étant commandé par ou au moins dépendant d'un signal de réglage qui est délivré en cas d'écart entre une grandeur de mesure du véhicule et une valeur de consigne, en particulier entre la vitesse de déplacement et une vitesse de consigne prédéterminée, ou entre la force de freinage et une force de freinage admissible,
la force supplémentaire de rappel agissant sur la pédale (7) en fonction de l'écart entre la valeur de consigne et en particulier entre la vitesse effective et la vitesse de consigne,
**caractérisé en ce que**
il présente des moyens de secours (9, 160) qui permettent à la pédale (7) de surmonter la force supplémentaire de recul lorsque les moyens de dérogation (1, 13) présentent un blocage, les moyens de secours (9, 160) consistant en l'introduction d'un ressort de sécurité (9) dans la chaîne cinématique entre l'actionneur (1) et la pédale (7),
**en ce que** la constante élastique de ce ressort de sécurité (9) est sélectionnée de telle sorte qu'il cède élastiquement lorsque la force d'actionnement exercée sur la pédale (7) dépasse un seuil défini et
**en ce que** l'actionneur (1, 13, 5, 11, 9) est doté d'une transmission (13) par laquelle il exerce la force de rappel supplémentaire sur la pédale (7), la transmission étant une transmission filetée (13) à billes formée par une broche filetée (5) et un écrou fileté (11), la broche filetée (5) agissant directement sur la pédale (7), et
**en ce que** la broche filetée (5) ou l'écrou fileté (11) sont montés élastiquement dans la direction axiale par l'intermédiaire du ressort de sécurité (9).
